# EUROPEAN PATENT APPLICATION

(11) **EP 4 379 422 A1**
(43) Date of publication of application: **05.06.2024**
(21) Application number: 21953692.7
(22) Date of filing: 17.08.2021
(51) Int. Cl.: G01S 17/32

(54) **TRANSCEIVER OPTICAL SYSTEM, LIDAR, TERMINAL DEVICE, AND METHOD AND APPARATUS**

(71) Applicant: Huawei Technologies Co., Ltd., Shenzhen, Guangdong 518129 (CN)
(72) Inventor: QIU, Sunjie, Shenzhen, Guangdong 518129 (CN); AN, Kai, Shenzhen, Guangdong 518129 (CN); HAN, Wei, Shenzhen, Guangdong 518129 (CN); GUO, Jiaxing, Shenzhen, Guangdong 518129 (CN); ZHANG, Haoliang, Shenzhen, Guangdong 518129 (CN)
(74) Representative: Maiwald GmbH
(86) International application number: PCT/CN2021/113079
(87) International publication number: WO 2023/019441

(57) **Abstract**

A transceiver optical system (120), a lidar (100), a terminal device, a method, and an apparatus are provided, to suppress a stray light signal in the optical field. The transceiver optical system (120) includes a first emitter optical system (121) and a first receiver optical system (122). An optical axis (L₁₁) of the first emitter optical system (121) and an optical axis (L₁₃) of the first receiver optical system (122) have a specific included angle (α), so that an echo signal transmitted into the first receiver optical system (122) and the optical axis (L₁₃) of the first receiver optical system (122) also have a specific included angle. In this way, a stray light signal is transferred by using the included angle (α), so that the stray light signal is effectively suppressed. In addition, effect of suppressing the stray light signal can be achieved by setting the specific included angle (α) between the optical axis (L₁₃) of the first receiver optical system (122) and the optical axis (L₁₁) of the first emitter optical system (121), and structural complexity of the first receiver optical system (122) and the first emitter optical system (121) may not be affected. This is easy to implement.

## Description

### TECHNICAL FIELD

This application relates to the field of sensing technologies, and in particular, to the optical field, and provides a transceiver optical system, a lidar, a terminal device, a method, and an apparatus.

### BACKGROUND

A lidar (light detection and ranging, LiDAR) is an optical measurement component. A working principle of the lidar is to emit a laser signal to an object, receive a target echo signal reflected by the object, and compare the target echo signal with the laser signal to obtain related parameters such as a distance and a speed of the object. The lidar can accurately scan a surrounding object to form a high-definition image. This helps implement quick identification and decision-making on the surrounding object. At present, the lidar has been widely used in scenarios such as intelligent vehicles, smart transportation, three-dimensional city mapping, and atmospheric environment monitoring.

However, the target echo signal is affected by emission power, an object reflectivity, an atmospheric condition, and a distance to the object, and consequently, only a very weak target echo signal can be reflected back to the lidar. To identify the weak target echo signal, the lidar needs to use a high-sensitivity detector. However, the high-sensitivity detector makes it difficult for the lidar to identify the target echo signal from a stray light signal. This is not conducive to detection accuracy of the lidar. Therefore, some methods need to be used to suppress the stray light signal. Currently, a common suppression solution in the industry is as follows: A relay system is additionally arranged on an optical axis of a receiver optical system, and a field diaphragm is disposed on an intermediate image plane of the relay system, so that a signal within a field-of-view range is continuously transmitted through the field diaphragm, and a signal beyond the field-of-view range is blocked by the field diaphragm. According to the solution, although a stray light signal beyond the field-of-view range can be suppressed, a stray light signal transmitted within the field-of-view range cannot be suppressed. In addition, a length of the optical axis of the receiver optical system is increased due to existence of the relay system. This is not conducive to reducing structural complexity of the receiver optical system.

In view of this, this application provides a transceiver optical system, to effectively suppress a stray light signal. In addition, structural complexity of the transceiver optical system is not affected as much as possible.

### SUMMARY

This application provides a transceiver optical system, a lidar, a terminal device, a method, and an apparatus, to effectively suppress a stray light signal. In addition, structural complexity of the transceiver optical system is not affected as much as possible.

According to a first aspect, this application provides a transceiver optical system, including a first emitter optical system and a first receiver optical system, where an optical axis of the first emitter optical system and an optical axis of the first receiver optical system have a first included angle, and the first included angle is greater than 0 degrees. During implementation, the first emitter optical system is configured to transmit a first transmit signal from a first light source, and the first receiver optical system is configured to receive a first echo signal. The first echo signal includes a target echo signal that is obtained after the first transmit signal is reflected by an object.

In the foregoing design, the optical axis of the first receiver optical system and the optical axis of the first emitter optical system have a specific included angle, so that a direction of the first echo signal transmitted into the first receiver optical system and the optical axis of the first receiver optical system also have a specific included angle. In this way, even if the target echo signal in the first echo signal is reflected after being focused to generate a stray light signal, the stray light signal deviates from a transmission path of the target echo signal in the receiver optical system due to existence of the included angle. This helps transfer the stray light signal. In addition, in this design, effect of suppressing the stray light signal can be implemented by setting the included angle between the optical axis of the first receiver optical system and the optical axis of the first emitter optical system. Compared with a solution in which a relay system is additionally arranged, this design is more convenient to implement without affecting structural complexity of the first receiver optical system and the first emitter optical system.

In a possible design, the transceiver optical system may further include a detector. The detector may include a first pixel region and a second pixel region, and the first pixel region and the second pixel region are controlled to present different light spots. In this design, the detector is controlled to present different light spots in different pixel regions. This helps decouple signals corresponding to the different light spots, and facilitates separate analysis of a signal corresponding to each light spot. The signals corresponding to the different light spots may be a target echo signal and a stray light signal, or may be any other two types of signals. This is not specifically limited.

In a possible design, the first pixel region and the second pixel region may not overlap. In this way, the light spots presented by controlling the first pixel region and the second pixel region may not overlap either. In another possible design, the first pixel region and the second pixel region may partially overlap. In this way, light spots presented in an overlapping region actually include a first light spot that is in the first pixel region and that is controlled to be presented in the overlapping region and a second light spot that is in the second pixel region and that is controlled to be presented in the overlapping region. Subsequently, the light spots presented in the overlapping region may be further filtered to obtain a pure second light spot from which the first light spot is removed, or obtain a pure first light spot from which the second light spot is removed.

In a possible design, the first pixel region is controlled to present a light spot corresponding to the target echo signal, and the second pixel region is controlled to present a light spot corresponding to a stray light signal. In this way, the target echo signal and the stray light signal are controlled to be presented in different pixel regions, so that impact of the stray light signal on a light spot in a pixel region in which the target echo signal is located can be reduced by transferring the stray light signal. This helps improve detection accuracy.

In a possible design, an axis of the detector may coincide with the optical axis of the first receiver optical system. The axis of the detector is a straight line formed from a center point of the detector in a direction perpendicular to a pixel plane of the detector. In this design, the detector and the first receiver optical system are disposed to maintain a same posture, so that a probability that the target echo signal transmitted by the first receiver optical system is focused on the pixel plane of the detector can be increased, and a probability that the target echo signal is focused outside the pixel plane of the detector can be decreased.

In a possible design, the first included angle may not be less than an angular resolution of a lidar to which the transceiver optical system belongs, and may be preferably set to a value not less than six times the angular resolution of the lidar to which the transceiver optical system belongs, to consider both a non-overlapping feature of the two light spots and impact of a form of the first receiver optical system on the entire transceiver optical system. The angular resolution of the lidar is related to a scanning direction of an object. For example, when a linear light spot is used to scan the object, if the scanned object is traversed in a vertical direction, the angular resolution in the vertical direction is a vertical angular resolution of the lidar, namely, an angle by which two adjacent linear light spots are spaced in the vertical direction. On the contrary, if the scanned object is traversed in a horizontal direction, the angular resolution in the horizontal direction is a horizontal angular resolution of the lidar, namely, an angle by which two adjacent linear light spots are spaced in the horizontal direction. In addition, if the scanned object is traversed in a tilt direction that is neither horizontal nor vertical, the angular resolution in the tilt direction includes both a horizontal angular resolution and a vertical angular resolution of the lidar. The horizontal angular resolution is a component of two adjacent linear light spots in the horizontal direction, and the vertical angular resolution is a component of two adjacent linear light spots in the vertical direction. The linear light spot may be a horizontal linear light spot or a vertical linear light spot, or may be a tilted linear light spot that is neither horizontal nor vertical, or may be a curved linear light spot, a spliced linear light spot, a curved linear light spot, an abnormal-shaped linear light spot, or the like. This is not specifically limited.

In a possible design, the first receiver optical system may include at least one light filter, a normal direction of the at least one light filter and the optical axis of the first receiver optical system have a second included angle, and the second included angle is greater than 0 degrees. The at least one light filter is configured to perform filtering on the received first echo signal, and output the target echo signal corresponding to the first transmit signal. According to this design, even if a signal is reflected after being transmitted to the at least one light filter to generate a stray light signal, the stray light signal can be reflected to another direction different from an incident direction. This helps reduce, by transferring the stray light signals in advance, stray light signals finally transmitted to the second pixel region of the detector.

In a possible design, the second included angle may not be less than the angular resolution of the lidar to which the transceiver optical system belongs, and may be preferably set to a value not less than six times the angular resolution of the lidar to which the transceiver optical system belongs, so that impact of a form of the light filter on the first receiver optical system is reduced when the at least one light filter transfers the stray light signal to a more deviated location. The angular resolution of the lidar is related to the scanning direction of the object. For example, when the linear light spot is used to scan the object, if the scanned object is traversed in the vertical direction, the angular resolution in the vertical direction is a vertical angular resolution of the lidar; or if the scanned object is traversed in the horizontal direction, the angular resolution in the horizontal direction is a horizontal angular resolution of the lidar. If the scanned object is traversed in a tilt direction that is neither horizontal nor vertical, the angular resolution in the tilt direction includes both the horizontal angular resolution and the vertical angular resolution of the lidar.

In a possible design, when the first receiver optical system includes at least one light filter and a lens assembly, the at least one light filter may be located before the lens assembly, or may be located between two adjacent lenses of the lens assembly, or may be located between the lens assembly and the detector. This is not specifically limited.

In a possible design, the at least one light filter may include one or more of a wedge-shaped light filter, a rectangular light filter, a square light filter, a cylindrical light filter, a trapezoidal light filter, or a polygonal light filter, and may further include a light filter of another shape. This is not specifically limited. When the light filter is a wedge-shaped light filter, a trapezoidal light filter, a polygonal light filter, or another light filter having an edge surface tilt feature, the light filter may keep a same form as another optical element in the first receiver optical system, to implement a second included angle between the normal direction of the light filter and the optical axis of the first receiver optical system by using the edge surface tilt feature of the light filter. In addition, the light filter and other optical elements in the first receiver optical system can be easily installed and arranged. When the light filter is a rectangular light filter, a square light filter, a cylindrical light filter, or another light filter that does not have an edge surface tilt feature, the light filter may maintain a different form from another optical element in the first receiver optical system, to implement a second included angle between a normal of the light filter and the optical axis of the first receiver optical system by changing a form of the light filter.

In a possible design, the first receiver optical system may further include a lens assembly and at least one first diaphragm, and the lens assembly is configured to focus the target echo signal corresponding to the first transmit signal to the first pixel region. The at least one first diaphragm may be located at one or more of the following locations: before the light filter, between the light filter and the lens assembly, between at least two adjacent lenses of the lens assembly, and between the lens assembly and the detector. According to this design, the stray light signal in the first receiver optical system can be further first eliminated or suppressed by the at least one first diaphragm, and a stray light signal that cannot be suppressed or eliminated is finally transmitted to the second pixel region of the detector. This helps further reduce stray light signals transmitted to the second pixel region of the detector, and further improves accuracy of transmitting the target echo signal by the first receiver optical system.

In a possible design, the at least one first diaphragm may include a stray light elimination diaphragm. The stray light elimination diaphragm may be located between at least two adjacent lenses of the lens assembly, and is configured to eliminate a stray light signal that is transmitted between the at least two adjacent lenses and that is transmitted to a side wall of the stray light elimination diaphragm, and a stray light signal that is transmitted to an aperture of the stray light elimination diaphragm may be transmitted forwards. The stray light signal includes but is not limited to: a crosstalk signal transmitted between at least two adjacent lenses through one or more reflections between the light filter, each lens in the lens assembly, a lens tube on which the lens assembly is located, and the detector, a ghost signal that is reflected back by irradiating an object with a high reflectivity and that exceeds normal power strength, a transmit signal sent by another lidar or another emitter optical system in the lidar, or another stray light signal different from the target echo signal, or the like.

In a possible design, the at least one first diaphragm may include an aperture diaphragm, the aperture diaphragm may be located at any location in the first receiver optical system, and an optical axis of the aperture diaphragm coincides with the optical axis of the first receiver optical system, to limit a light beam size of an output target echo signal.

In a possible design, an inner surface of the at least one first diaphragm may be of a concave structure or a convex structure, to reduce strength of the stray light signal by increasing a quantity of reflection times of the stray light signal transmitted to the at least one first diaphragm. This achieves an objective of suppressing the stray light signal.

In a possible design, the inner surface of the at least one first diaphragm may be implemented by using one or more of the following processing: matting material spraying, to eliminate a stray light signal transmitted to the inner surface of the at least one first diaphragm, where the matting material may include but is not limited to a pure polyester matting agent, an organic matting agent, an matte paint, or the like; an anodic oxidization process, where a reflectivity of the anodic oxidization may be controlled to a small value, to reduce a reflection probability of the stray light signal transmitted to the inner surface of at least one first diaphragm; coating, for example, an anti-reflection film is coated, to achieve an objective of reducing or eliminating the stray light signal of the system by reducing a reflectivity of light on the inner surface of the diaphragm; or performing electrophoresis, that is, using electrophoresis materials with different electrical properties to coat a film on the inner surface to form an insoluble intra-particle microgel, so that the stray light signal is transmitted to the film to form diffuse reflection, thereby achieving an objective of matting. The electrophoresis material includes but is not limited to electrophoresis resin or electrophoresis aluminum alloy.

In a possible design, the transceiver optical system may further include a second diaphragm, and the second diaphragm is connected to a protective layer or a photosensitive image plane of the detector. The second diaphragm may be specifically a field diaphragm, and is configured to: limit a field of view of a target echo signal that can be received by the photosensitive image plane of the detector, and suppress a stray light signal transmitted to a side wall of the field diaphragm. The stray light signal transmitted to an aperture of the field diaphragm may be transmitted forwards, and is subsequently presented in the second pixel region of the detector by using the receiver optical system. The stray light signal transmitted to the side wall or the aperture of the field diaphragm includes but is not limited to: a crosstalk signal transmitted between at least two adjacent lenses through one or more reflections between the light filter, each lens in the lens assembly, a lens tube on which the lens assembly is located, and the detector, a crosstalk signal reflected back to the transceiver optical system through the photosensitive image plane or the protective layer of the detector, a ghost signal that is reflected back by irradiating an object with a high reflectivity and that exceeds normal power strength, a transmit signal sent by another lidar or another emitter optical system in the lidar, or another stray light signal different from the target echo signal, or the like.

In a possible design, when the second diaphragm is connected to the photosensitive image plane of the detector, the field of view limited by the second diaphragm is the field of view of the target echo signal that can be received by the photosensitive image plane of the detector. However, in this way, the second diaphragm and the photosensitive image plane can be connected only after the protective layer of the detector is removed. When the second diaphragm is connected to the protective layer of the detector, the field of view limited by the second diaphragm is the field of view of the target echo signal that can be received by the protective layer of the detector. Before the target echo signal is transmitted to the photosensitive image plane of the detector, the field of view may be further affected by a path between the protective layer and the photosensitive image plane. In this way, the field of view of the target echo signal actually received by the photosensitive image plane changes, and therefore, the second diaphragm connected to the protective layer actually belongs to a type of field diaphragm. However, in this way, the protective layer of the second diaphragm may be directly connected, and the detector does not need to be disassembled.

In a possible design, a surface that is of the second diaphragm and that faces the detector and/or a surface that is of the second diaphragm and that backs onto the detector may be implemented by one or more of the following processing: matting material spraying; an anodic oxidization process; coating; or electrophoresis.

In a possible design, a quantity of emitter optical systems and a quantity of receiver optical systems in the transceiver optical system may be one-to-one, one-to-many, many-to-one, or many-to-many. Examples are as follows.

In one case, the transceiver optical system is a one-emitter and one-receiver system, and includes the first emitter optical system and the first receiver optical system described in the foregoing content.

In another case, the transceiver optical system is a one-emitter and two-receiver system, and includes a first emitter optical system, a first receiver optical system, and a second receiver optical system. The first emitter optical system is configured to transmit a first transmit signal from a first light source, the first receiver optical system is configured to receive a first echo signal, and the second receiver optical system is configured to receive a second echo signal. The second echo signal is the same as the first echo signal, and each includes a target echo signal that is obtained after the first transmit signal is reflected by an object.

In still another case, the transceiver optical system is a two-emitter and one-receiver system, and includes a first emitter optical system, a second emitter optical system, and a first receiver optical system. The first emitter optical system is configured to transmit a first transmit signal from a first light source, the second emitter optical system is configured to transmit a second transmit signal from a second light source, and the first receiver optical system is configured to receive a first echo signal and a second echo signal. The first echo signal may include a target echo signal that is obtained after the first transmit signal is reflected by an object, and the first echo signal includes a target echo signal that is obtained after the second transmit signal is reflected by the object. The second light source and the first light source may be the same. In this case, the first echo signal and the second echo signal are also the same. Alternatively, the second light source and the first light source may be different. In this case, the first echo signal and the second echo signal are also different.

In yet another case, the transceiver optical system is a two-emitter and two-receiver system, and includes a first emitter optical system, a second emitter optical system, a first receiver optical system, and a second receiver optical system. The first emitter optical system is configured to transmit a first transmit signal from a first light source, and the first receiver optical system is configured to receive a first echo signal. The first echo signal includes a target echo signal that is obtained after the first transmit signal is reflected by an object. Correspondingly, the second emitter optical system is configured to transmit a second transmit signal from a second light source, and the second receiver optical system is configured to receive a second echo signal. The second echo signal includes a target echo signal that is obtained after the second transmit signal is reflected by an object. The second light source and the first light source may be the same. In this case, the first echo signal and the second echo signal are also the same. Alternatively, the second light source and the first light source may be different. In this case, the first echo signal and the second echo signal are also different.

In a possible design, when the transceiver optical system includes a plurality of receiver optical systems, the plurality of receiver optical systems may be corresponding to a same detector, or may be corresponding to two or more detectors. For example, in the plurality of receiver optical systems, at least two receiver optical systems are corresponding to a same detector, or the plurality of receiver optical systems are corresponding to different detectors. This is not specifically limited.

According to a second aspect, this application provides a transceiver optical system, including a first emitter optical system and a first receiver optical system. The first emitter optical system is configured to transmit a first transmit signal from a first light source, and the first receiver optical system is configured to receive a first echo signal. The first echo signal includes a target echo signal that is obtained after the first transmit signal is reflected by an object. The first receiver optical system includes at least one light filter, a normal direction of the at least one light filter and an optical axis of the first receiver optical system have a second included angle, and the second included angle is greater than 0 degrees. The at least one light filter is configured to perform filtering on the received first echo signal, and output the target echo signal corresponding to the first transmit signal. According to this design, even if a signal is reflected after being evenly transmitted back to the light filter along two sides of the optical axis of the receiver optical system to generate a stray light signal, the stray light signal is reflected to another range that deviates from the optical axis of the receiver optical system due to existence of the second included angle, and is not evenly reflected back to a pixel region as the target echo signal along the two sides of the optical axis of the receiver optical system. In this way, the stray light signal can be suppressed by transferring a part of or all of the stray light signal.

In a possible design, the second included angle may not be less than an angular resolution of a lidar to which the transceiver optical system belongs, and may be, preferably, set to a value that is not less than six times the angular resolution of the lidar to which the transceiver optical system belongs.

In a possible design, the at least one light filter may include one or more of a wedge-shaped light filter, a rectangular light filter, a square light filter, a cylindrical light filter, a trapezoidal light filter, or a polygonal light filter, and may further include a light filter of another shape. This is not specifically limited.

In a possible design, the first receiver optical system may further include a lens assembly and at least one first diaphragm, and the lens assembly is configured to focus the target echo signal to a detector. The at least one first diaphragm may be located at one or more of the following locations: before the light filter, between the light filter and the lens assembly, between at least two adjacent lenses of the lens assembly, and between the lens assembly and the detector.

In a possible design, when the first receiver optical system includes the at least one light filter and the lens assembly, the at least one light filter may be located before the lens assembly, or may be located between two adjacent lenses of the lens assembly, or may be located between the lens assembly and the detector. This is not specifically limited.

In a possible design, the at least one first diaphragm may include a stray light elimination diaphragm, and the stray light elimination diaphragm may be located between at least two adjacent lenses of the lens assembly.

In a possible design, the at least one first diaphragm may include an aperture diaphragm, the aperture diaphragm may be located at any location in the first receiver optical system, and an optical axis of the aperture diaphragm coincides with the optical axis of the first receiver optical system.

In a possible design, the at least one first diaphragm may be of a concave structure or a convex structure.

In a possible design, an inner surface of the at least one first diaphragm may be implemented by using one or more of the following processing: matting material spraying; an anodic oxidation process; coating; or electrophoresis.

In a possible design, the transceiver optical system may further include a detector and a second diaphragm, and the second diaphragm is connected to a protective layer or a photosensitive image plane of the detector.

In a possible design, the second diaphragm may be a field diaphragm, and is configured to: limit a field of view of the target echo signal received by the photosensitive image plane of the detector, and suppress a stray light signal transmitted to a side wall of the field diaphragm.

In a possible design, a surface that is of the second diaphragm and that faces the detector, and/or a surface that is of the second diaphragm and that backs onto the detector are implemented by one or more of the following processing: matting material spraying; an anodic oxidization process; coating; or electrophoresis.

In a possible design, the optical axis of the first emitter optical system and the optical axis of the first receiver optical system have a first included angle, and the first included angle is greater than 0 degrees.

In a possible design, the first included angle may not be less than the angular resolution of the lidar to which the transceiver optical system belongs, and may be preferably set to a value not less than six times the angular resolution of the lidar to which the transceiver optical system belongs.

In a possible design, when the transceiver optical system includes a detector, the detector may include a first pixel region and a second pixel region, and the first pixel region and the second pixel region are controlled to present different light spots.

In a possible design, the first pixel region and the second pixel region do not overlap or partially overlap.

In a possible design, the first pixel region is controlled to present a light spot corresponding to the target echo signal, and the second pixel region is controlled to present a light spot corresponding to the stray light signal. The stray light signal is a part of stray light signals that are of the lidar and that cannot be eliminated by a component disposed in the transceiver optical system.

In a possible design, when the transceiver optical system includes a detector, an optical axis of the detector may coincide with the optical axis of the first receiver optical system, where the optical axis of the detector is a straight line formed from a center point of the detector in a direction perpendicular to a pixel plane of the detector.

In a possible design, the transceiver optical system may further include a second emitter optical system and/or a second receiver optical system. The second emitter optical system is configured to transmit a second transmit signal from a second light source, and the second receiver optical system is configured to receive a second echo signal. The second light source is the same as or different from the first light source, and the second echo signal is the same as or different from the first echo signal.

In a possible design, when the transceiver optical system includes a plurality of receiver optical systems, the plurality of receiver optical systems may be corresponding to a same detector, or may be corresponding to two or more detectors. For example, in the plurality of receiver optical systems, at least two receiver optical systems are corresponding to a same detector, or the plurality of receiver optical systems are corresponding to different detectors. This is not specifically limited.

According to a third aspect, this application provides a transceiver optical system, including a first emitter optical system and a first receiver optical system. The first emitter optical system is configured to transmit a first transmit signal from a first light source, and the first receiver optical system is configured to receive a first echo signal. The first echo signal includes a target echo signal that is obtained after the first transmit signal is reflected by an object. The first receiver optical system includes a lens assembly and at least one first diaphragm, the lens assembly is configured to focus the target echo signal to a detector, and the at least one first diaphragm is configured to suppress a stray light signal. The at least one first diaphragm may be located at one or more of the following locations: before the light filter, between the light filter and the lens assembly, between at least two adjacent lenses of the lens assembly, and between the lens assembly and the detector.

In a possible design, the at least one first diaphragm may include a stray light elimination diaphragm, and the stray light elimination diaphragm may be located between at least two adjacent lenses of the lens assembly.

In a possible design, the at least one first diaphragm may include an aperture diaphragm, the aperture diaphragm may be located at any location in the first receiver optical system, and an optical axis of the aperture diaphragm coincides with an optical axis of the first receiver optical system.

In a possible design, the at least one first diaphragm may be of a concave structure or a convex structure.

In a possible design, an inner surface of the at least one first diaphragm may be implemented by using one or more of the following processing: matting material spraying; an anodic oxidation process; coating; or electrophoresis.

In a possible design, the transceiver optical system may further include a detector and a second diaphragm, and the second diaphragm is connected to a protective layer or a photosensitive image plane of the detector.

In a possible design, the second diaphragm may be a field diaphragm, and is configured to: limit a field of view of the target echo signal received by the photosensitive image plane of the detector, and suppress the stray light signal.

In a possible design, a surface that is of the second diaphragm and that faces the detector, and/or a surface that is of the second diaphragm and that backs onto the detector are implemented by one or more of the following processing: matting material spraying; an anodic oxidization process; coating; or electrophoresis.

In a possible design, the first receiver optical system may further include at least one light filter, a normal direction of the at least one light filter and the optical axis of the first receiver optical system have a second included angle, and the second included angle is greater than 0 degrees. The at least one light filter is configured to perform filtering on the received first echo signal, and output the target echo signal corresponding to the first transmit signal.

In a possible design, the second included angle may not be less than the angular resolution of the lidar to which the transceiver optical system belongs, and may be preferably set to a value not less than six times the angular resolution of the lidar to which the transceiver optical system belongs.

In a possible design, the at least one light filter may include one or more of a wedge-shaped light filter, a rectangular light filter, a square light filter, a cylindrical light filter, a trapezoidal light filter, or a polygonal light filter, and may further include a light filter of another shape. This is not specifically limited.

In a possible design, when the first receiver optical system includes at least one light filter and a lens assembly, the at least one light filter may be located before the lens assembly, or may be located between two adjacent lenses of the lens assembly, or may be located between the lens assembly and the detector. This is not specifically limited.

In a possible design, an optical axis of the first emitter optical system and the optical axis of the first receiver optical system have a first included angle, and the first included angle is greater than 0 degrees.

In a possible design, the first included angle may not be less than the angular resolution of the lidar to which the transceiver optical system belongs, and may be preferably set to a value not less than six times the angular resolution of the lidar to which the transceiver optical system belongs.

In a possible design, when the transceiver optical system includes a detector, the detector may include a first pixel region and a second pixel region, and the first pixel region and the second pixel region are controlled to present different light spots.

In a possible design, the first pixel region and the second pixel region do not overlap or partially overlap.

In a possible design, the first pixel region is controlled to present a light spot corresponding to the target echo signal, and the second pixel region is controlled to present a light spot corresponding to the stray light signal. The stray light signal is a part of stray light signals that are of the lidar and that cannot be eliminated by a component disposed in the transceiver optical system.

In a possible design, when the transceiver optical system includes a detector, an optical axis of the detector may coincide with the optical axis of the first receiver optical system, where the optical axis of the detector is a straight line formed from a center point of the detector in a direction perpendicular to a pixel plane of the detector.

In a possible design, the transceiver optical system may further include a second emitter optical system and/or a second receiver optical system. The second emitter optical system is configured to transmit a second transmit signal from a second light source, and the second receiver optical system is configured to receive a second echo signal. The second light source is the same as or different from the first light source, and the second echo signal is the same as or different from the first echo signal.

In a possible design, when the transceiver optical system includes a plurality of receiver optical systems, the plurality of receiver optical systems may be corresponding to a same detector, or may be corresponding to two or more detectors. For example, in the plurality of receiver optical systems, at least two receiver optical systems are corresponding to a same detector, or the plurality of receiver optical systems are corresponding to different detectors. This is not specifically limited.

According to a fourth aspect, this application provides a transceiver optical system, including a detector and a second diaphragm, where the second diaphragm is connected to a protective layer or a photosensitive image plane of the detector.

In a possible design, the second diaphragm may be a field diaphragm, and is configured to: limit a field of view of a target echo signal received by the photosensitive image plane of the detector, and suppress a stray light signal.

In a possible design, a surface that is of the second diaphragm and that faces the detector, and/or a surface that is of the second diaphragm and that backs onto the detector are implemented by one or more of the following processing: matting material spraying; an anodic oxidization process; coating; or electrophoresis.

In a possible design, the transceiver optical system may further include a first receiver optical system, the first receiver optical system includes a lens assembly and at least one first diaphragm, and the lens assembly is configured to focus the target echo signal to the detector. The at least one first diaphragm may be located at one or more of the following locations: before the light filter, between the light filter and the lens assembly, between at least two adjacent lenses of the lens assembly, and between the lens assembly and the detector.

In a possible design, when the first receiver optical system includes at least one light filter and a lens assembly, the at least one light filter may be located before the lens assembly, or may be located between two adjacent lenses of the lens assembly, or may be located between the lens assembly and the detector. This is not specifically limited.

In a possible design, the at least one first diaphragm may include a stray light elimination diaphragm, and the stray light elimination diaphragm may be located between at least two adjacent lenses of the lens assembly.

In a possible design, the at least one first diaphragm may include an aperture diaphragm, the aperture diaphragm may be located at any location in the first receiver optical system, and an optical axis of the aperture diaphragm coincides with an optical axis of the first receiver optical system.

In a possible design, the at least one first diaphragm may be of a concave structure or a convex structure.

In a possible design, an inner surface of the at least one first diaphragm may be implemented by using one or more of the following processing: matting material spraying; an anodic oxidation process; coating; or electrophoresis.

In a possible design, the transceiver optical system may further include a first emitter optical system, an optical axis of the first emitter optical system and the optical axis of the first receiver optical system have a first included angle, and the first included angle is greater than 0 degrees. The first emitter optical system is configured to transmit a first transmit signal from a first light source, and the first receiver optical system is configured to receive a first echo signal. The first echo signal includes a target echo signal that is obtained after the first transmit signal is reflected by an object.

In a possible design, the first included angle may not be less than an angular resolution of a lidar to which the transceiver optical system belongs, and may be preferably set to a value not less than six times the angular resolution of the lidar to which the transceiver optical system belongs.

In a possible design, the detector may include a first pixel region and a second pixel region, and the first pixel region and the second pixel region are controlled to present different light spots.

In a possible design, the first pixel region and the second pixel region do not overlap or partially overlap.

In a possible design, the first pixel region is controlled to present a light spot corresponding to the target echo signal, and the second pixel region is controlled to present a light spot corresponding to the stray light signal. The stray light signal is a part of stray light signals that are of the lidar and that cannot be eliminated by a component disposed in the transceiver optical system.

In a possible design, an optical axis of the detector may coincide with the optical axis of the first receiver optical system. The optical axis of the detector is a straight line formed from a center point of the detector in a direction perpendicular to a pixel plane of the detector.

In a possible design, the transceiver optical system may further include a second emitter optical system and/or a second receiver optical system. The second emitter optical system is configured to transmit a second transmit signal from a second light source, and the second receiver optical system is configured to receive a second echo signal. The second light source is the same as or different from the first light source, and the second echo signal is the same as or different from the first echo signal.

In a possible design, when the transceiver optical system includes a plurality of receiver optical systems, the plurality of receiver optical systems may be corresponding to a same detector, or may be corresponding to two or more detectors. For example, in the plurality of receiver optical systems, at least two receiver optical systems are corresponding to a same detector, or the plurality of receiver optical systems are corresponding to different detectors. This is not specifically limited.

According to a fifth aspect, this application provides a lidar, including the transceiver optical system according to any design of the first aspect to the fourth aspect.

In a possible design, a first light source may be a linear light source. In this way, the lidar may scan an object by using a linear light spot emitted by the linear light source, thereby helping implement efficient and accurate scanning of the object.

In a possible design, the lidar may further include a scanning mechanism, and the scanning mechanism includes one or more of a multi-sided rotating mirror, a swing mirror, a micro-electro-mechanical system (micro-electro-mechanical system, MEMS) scanning mirror, or a prism.

According to a sixth aspect, this application provides a terminal device, including the lidar according to any one of the designs of the fifth aspect. For example, examples of the terminal device include but are not limited to: a smart home device (like a television, a robotic vacuum cleaner, a smart desk lamp, an acoustic system, an intelligent lighting system, an electrical appliance control system, home background music, a home theater system, an intercom system, and a video surveillance), an intelligent transportation device (like a car, a ship, an unmanned aerial vehicle, a train, a truck, and a truck), an intelligent manufacturing device (like a robot, an industrial device, intelligent logistics, and a smart factory), and an intelligent terminal (like a mobile phone, a computer, a tablet computer, a palmtop computer, a desktop computer, a headset, an acoustic device, a wearable device, a vehicle-mounted device, a virtual reality device and an augmented reality device).

According to a seventh aspect, this application provides a control method, where the method is applicable to a control and processing unit in a lidar, and the method includes: The control and processing unit controls a first light source to emit a first transmit signal, where the first transmit signal is transmitted by using a first emitter optical system; and the control and processing unit controls a detector to receive a first echo signal, where the first echo signal includes a target echo signal that is obtained after the first transmit signal is reflected by an object, and the target echo signal is transmitted by using a first receiver optical system. An optical axis of the first emitter optical system and an optical axis of the first receiver optical system have a first included angle, and the first included angle is greater than 0 degrees.

In a possible design, the control and processing unit may further control the detector to gate a first pixel region, where the first pixel region is used to present a light spot corresponding to the target echo signal.

In a possible design, the control and processing unit may further control the detector to gate a second pixel region, where the second pixel region is used to present a light spot corresponding to a clutter signal.

In a possible design, the control and processing unit obtains target information by using an electrical signal corresponding to the target echo signal.

According to an eighth aspect, this application provides a control apparatus, including at least one processor and an interface circuit, where the interface circuit is configured to provide data or code instructions for the at least one processor, and the at least one processor is configured to implement, by using a logic circuit or executing the code instructions, the method performed by the control and processing unit in any design of the seventh aspect.

According to a ninth aspect, this application provides a chip, including a processor and an interface. The processor is configured to read instructions through the interface, to perform the method performed by the control and processing unit in any design of the seventh aspect.

According to a tenth aspect, this application provides a computer-readable storage medium, where the computer-readable storage medium stores a computer program, and when the computer program is run, the method according to any design of the seventh aspect is performed.

According to an eleventh aspect, this application provides a computer program product. When the computer program product runs on a processor, the method according to any design of the seventh aspect is implemented.

For beneficial effects of the second aspect to the eleventh aspect, refer to technical effects that can be achieved by corresponding designs in the first aspect. Details are not described herein again.

### BRIEF DESCRIPTION OF DRAWINGS

FIG. 1 shows an example of a schematic diagram of an application scenario of a lidar according to an embodiment of this application;
FIG. 2 is a schematic diagram of an internal architecture of a lidar according to an embodiment of this application;
FIG. 3 shows an example of a schematic diagram of internal light transmission of a transceiver optical system according to an embodiment of this application;
FIG. 4 shows an example of a schematic diagram of an architecture of another transceiver optical system according to an embodiment of this application;
FIG. 5(A) and FIG. 5(B) show an example of a schematic diagram of internal light transmission of another transceiver optical system according to an embodiment of this application;
FIG. 6 shows an example of a schematic diagram of a structure of a light filter according to an embodiment of this application;
FIG. 7 shows an example of a schematic diagram of a structure of a field diaphragm according to an embodiment of this application;
FIG. 8 shows an example of a schematic diagram of an architecture of another transceiver optical system according to an embodiment of this application;
FIG. 9 shows an example of a schematic diagram of an architecture of still another transceiver optical system according to an embodiment of this application;
FIG. 10 shows an example of a schematic diagram of an architecture of yet another transceiver optical system according to an embodiment of this application;
FIG. 11 shows an example of a schematic diagram of an architecture of still another transceiver optical system according to an embodiment of this application;
FIG. 12 shows an example of a schematic diagram of a structure of yet another transceiver optical system according to an embodiment of this application;
FIG. 13 shows an example of a schematic diagram of a structure of another transceiver optical system according to an embodiment of this application;
FIG. 14 shows an example of a schematic diagram of a structure of still another transceiver optical system according to an embodiment of this application; and
FIG. 15 shows an example of a schematic diagram of a structure of yet another transceiver optical system according to an embodiment of this application.

### DESCRIPTION OF EMBODIMENTS

A transceiver optical system disclosed in this application may be applied to a terminal device having a detection capability, and is particularly applicable to a terminal device having a laser detection capability. The terminal device may be an intelligent device having a detection capability, including but not limited to: a smart home device, for example, a television, a robotic vacuum cleaner, a smart desk lamp, an acoustic system, an intelligent lighting system, an electrical appliance control system, home background music, a home theater system, an intercom system, and a video surveillance system; an intelligent transportation device, for example, a car, a ship, an unmanned aerial vehicle, a train, and a truck; and an intelligent manufacturing device, for example, a robot, an industrial device, intelligent logistic, and a smart factory. Alternatively, the terminal device may be a computer device having a detection capability, for example, a desktop computer, a personal computer, or a server. It should be further understood that the terminal device may alternatively be a portable electronic device having a detection capability, for example, a mobile phone, a tablet computer, a palmtop computer, a headset, an acoustic device, a wearable device (like a smartwatch), a vehicle-mounted device, a virtual reality device, or an augmented reality device. An example of the portable electronic device includes but is not limited to a portable electronic device that carries an iOS^{®}, an Android^{®}, a Microsoft^{®}, a Harmony^{®}, or another operating system. The portable electronic device may alternatively be, for example, a laptop (Laptop) with a touch-sensitive surface (for example, a touch panel).

The following describes the technical solutions in embodiments of this application in detail with reference to specific accompanying drawings.

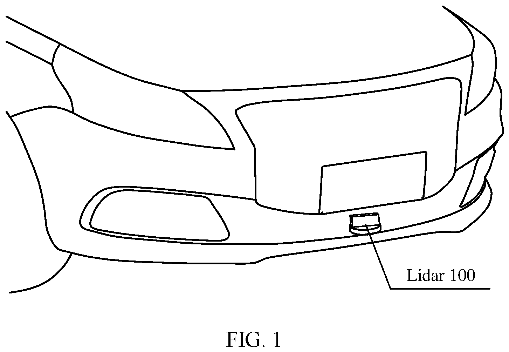

In a specific application scenario, the transceiver optical system may be applied to a lidar. FIG. 1 shows an example of a schematic diagram of an application scenario of a lidar according to an embodiment of this application. In this example, a lidar 100 is installed on a vehicle, and therefore is also referred to as a vehicle-mounted lidar. In addition to the vehicle-mounted lidar, the lidar also includes a shipborne lidar installed on a ship and an airborne lidar installed on a machine. In a possible example, as shown in FIG. 1, the lidar 100 may be specifically installed at a head location of a vehicle. In this way, in a driving process of the vehicle, the lidar 100 may send a laser signal. The laser signal is reflected by an object after being irradiated to an object in an ambient environment, and a reflected target echo signal may be received by the lidar 100. Then, the lidar 100 obtains ambient environment information of the vehicle through detection based on the target echo signal, to implement a driving function of the vehicle by using the environment information, for example, including but not limited to autonomous driving or assisted driving.

It should be noted that the lidar 100 may be one of a mechanical lidar, a liquid-state lidar, a pure solid-state lidar, or a hybrid solid-state lidar (also referred to as a semi-solid-state lidar), or may be another type of lidar. This is not specifically limited in embodiments of this application. In addition, a housing of the lidar 100 may be a cuboid shown in FIG. 1, or may be a square, a cylinder, an annular body, an amorphous body, or the like. This is not specifically limited in this application either.

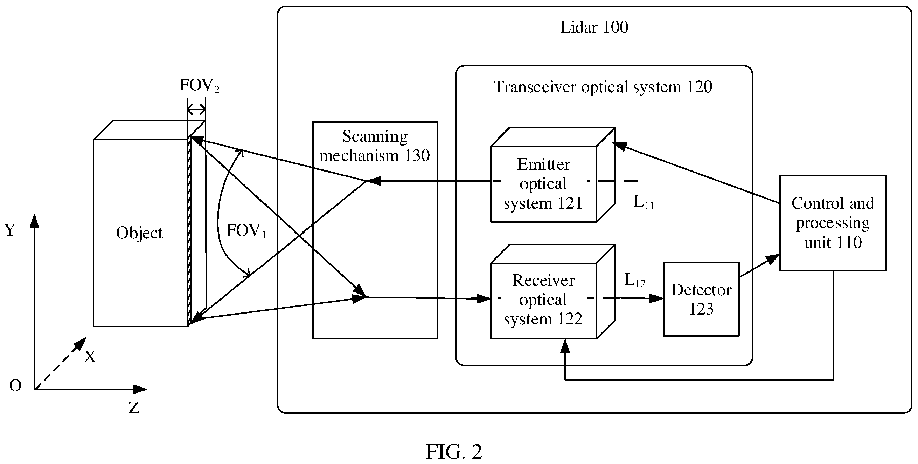

Further, for example, FIG. 2 is a schematic diagram of an internal architecture of a lidar according to an embodiment of this application. As shown in FIG. 2, in this example, a lidar 100 may include a control and processing unit 110, a transceiver optical system 120, and a scanning mechanism 130. The transceiver optical system 120 includes an emitter optical system 121, a receiver optical system 122, and a detector 123. The emitter optical system 121 and the receiver optical system 122 are systems including optical elements. The optical elements include but are not limited to a lens, a light filter, a polarizer, a reflector, a beam splitter, a prism, a window plate, a scattering sheet, and the like. The control and processing unit 110 may have a signal control and processing capability, and may be connected to the emitter optical system 121, the receiver optical system 122, and the detector 123 by using, for example, a controller area network (controller area network, CAN) bus or in another wired or wireless connection manner. The scanning mechanism 130 may include one or more of a multi-sided rotating mirror, a swing mirror, a micro-electro-mechanical system (micro-electro-mechanical system, MEMS) scanning mirror, or a prism. The control and processing unit 110 may control the emitter optical system 121 to transmit a transmit signal from a first light source, and may further control the scanning mechanism 130 to scan and traverse a detection region by using the transmit signal. The transmit signal is reflected by the object after an object in the detection region is scanned, and a reflected target echo signal and some other echo signals are received by the receiver optical system 122 and transmitted to the detector 123 under control of the control and processing unit 110. Further, the detector 123 presents, under control of the control and processing unit 110, a light spot corresponding to the echo signal, generates an electrical signal corresponding to the light spot, and sends the electrical signal to the control and processing unit 110. The control and processing unit 110 analyzes the electrical signal to obtain target information, for example, a distance, an orientation, a height, a speed, a posture, and even a shape of the object. The target information may be further used to plan autonomous driving or assisted driving of a vehicle with reference to other sensor information of the vehicle.

It should be noted that the control capability and the processing capability of the control and processing unit 110 may be integrated into one component for implementation, or may be separately implemented in a plurality of components. For example, the control and processing unit 110 may be specifically an integrated circuit chip, for example, may be a general purpose processor, a field programmable gate array (field programmable gate array, FPGA), an application-specific integrated chip (application-specific integrated circuit, ASIC), a system on chip (system on chip, SoC), a network processor (network processor, NP), a digital signal processing circuit (digital signal processor, DSP), a micro controller (micro controller unit, MCU), a programmable controller (programmable logic device, PLD), another programmable logic device, a discrete gate or a transistor logic device, a discrete hardware component, or another integrated chip. The control and processing unit 110 may include a central processing unit (central processor unit, CPU), a neural-network processing unit (neural-network processing unit, NPU), and a graphics processing unit (graphics processing unit, GPU), and may further include an application processor (application processor, AP), a modem processor, an image signal processor (image signal processor, ISP), a video codec, a digital signal processor (digital signal processor, DSP), and/or a baseband processor. This is not specifically limited.

In an optional implementation, the first light source may be a linear light source, and the transceiver optical system 120 scans an object in a linear scanning manner. For example, still refer to FIG. 2. After being transmitted by using the emitter optical system 121, the transmit signal emitted by the first light source is displayed as a linear light spot on a YOX plane. Each time after the linear light spot is adjusted by the scanning mechanism 130, a linear region (namely, a region filled with oblique lines on the object shown in FIG. 2) corresponding to a vertical angle of view FOV₁ on the object is scanned. Each time a linear region is scanned, the scanning mechanism 130 controls a linear light spot subsequently emitted by the emitter optical system 121 to move to a next linear region in a positive direction of an X-axis shown in the figure, and determines that a detection region is traversed until a region corresponding to the entire horizontal angle of view FOV₂ is scanned. Correspondingly, after being reflected by the object, the linear light spot emitted by the emitter optical system 121 is still a linear light spot. The linear light spot is transmitted back to the receiver optical system 122 by using the scanning mechanism 130, and is transmitted in the receiver optical system 122 and focused on a pixel region of the detector 123. In addition, when interference from a stray light signal is not considered, the light spot presented in the pixel region is also a linear light spot theoretically. It should be understood that the linear light spot adjusted by the scanning mechanism 130 shown in FIG. 2 is parallel to a Y-axis. This is only a possible design. In some other designs, the linear light spot adjusted by the scanning mechanism 130 may alternatively be parallel to the X-axis. In addition, each time the linear light spot is used to scan a linear region corresponding to a horizontal angle of view FOV2 on the object, the linear light spot moves in a positive direction or a negative direction of the Y-axis shown in the figure until a region corresponding to the entire vertical angle of view FOV₁ is scanned. Alternatively, in some other designs, the linear light spot adjusted by the scanning mechanism 130 may be a tilted linear light spot that has an included angle with each of the X-axis and the Y-axis, and may move in a positive direction or a negative direction of the X-axis, a positive direction or a negative direction of the Y-axis, or another direction on an XOY plane shown in the figure until a region corresponding to the entire vertical angle of view FOV₁ and the entire horizontal angle of view FOV₂ is scanned.

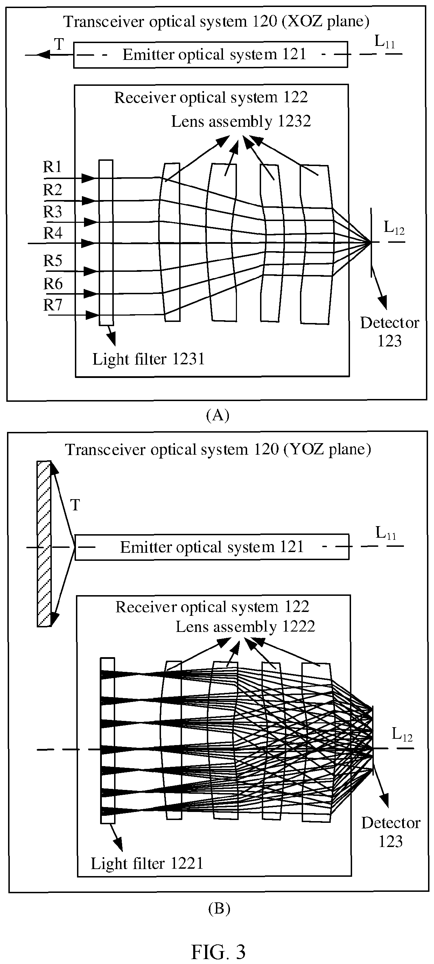

Based on the lidar 100 shown in FIG. 2, FIG. 3 shows an example of a schematic diagram of internal light transmission of a transceiver optical system according to an embodiment of this application, where (A) in FIG. 3 shows a light transmission diagram of a transceiver optical system 120 on an XOZ plane, and (B) in FIG. 3 shows a light transmission diagram of the transceiver optical system 120 on a YOZ plane. Refer to (A) in FIG. 3 and (B) in FIG. 3. In this example, an optical axis of an emitter optical system 121 is L₁₁, an optical axis of a receiver optical system 122 is L₁₂, a normal line of a pixel plane of the detector 123 coincides with the optical axis L₁₂, and L₁₁ and L₁₂ are parallel. Based on the configuration, a light spot corresponding to an echo signal received by the receiver optical system 122 is finally presented in a central pixel region of the detector 123. Specifically, refer to FIG. 2 and (A) in FIG. 3. From a perspective of an XOZ plane, after an object is scanned by each linear light spot T emitted by the emitter optical system 121, diffuse reflection (namely, reflection to all directions) occurs on the object, and consequently, the receiver optical system 122 receives a plurality of echo signals reflected from all directions, such as an echo signal R₁, an echo signal R₂, an echo signal R₃, an echo signal R₄, an echo signal R₅, an echo signal R₆, and an echo signal R₇. Then, after the echo signal R₁ to the echo signal R₇ are transmitted by using an optical element in the receiver optical system 122, the target echo signals are uniformly focused on the central pixel region of the detector 123. From another angle, refer to FIG. 2 and (B) in FIG. 3. From a perspective of a YOZ plane, after each of the echo signal R₁ to the echo signal R₇ is transmitted by using the receiver optical system 122, a target echo signal in the echo signal R₁ to the echo signal R₇ is focused on a linear pixel region at a central location of the detector 123.

However, refer to (A) in FIG. 3. The target echo signal in the echo signal R₇ to the echo signal R₁ is reflected by the detector 123 after being focused on the central pixel region of the detector 123 to generate a stray light signal. The stray light signal returns to the receiver optical system 122 in a direction reverse to a transmission direction of the echo signal R₇ to the echo signal R₁, and is finally focused on the central pixel region of the detector 123 after being reflected a plurality of times between optical elements of the receiver optical system 122. In this case, because both the target echo signal and the stray light signal are focused on the central pixel region, a light spot of the target echo signal is interfered by the stray light signal. This is not conducive to improving detection accuracy of the target echo signal. Although there are some solutions for suppressing a stray light signal currently, in these solutions, a relay system including a field diaphragm needs to be additionally arranged in the receiver optical system 122. Consequently, structural complexity of the receiver optical system 122 is increased as a structure of the receiver optical system 122 needs to be improved, and a stray light signal at another location cannot be suppressed as only a stray light signal within a field-of-view range can be suppressed. Therefore, how to effectively suppress a stray light signal in the transceiver optical system 120 without affecting structural complexity of the transceiver optical system 120 is a technical problem that needs to be urgently resolved in the current field of lidars.

In view of this, this application provides a transceiver optical system. An optical axis of a receiver optical system and an optical axis of an emitter optical system have a specific included angle, so that the receiver optical system focuses a target echo signal and a stray light signal to different pixel regions, to reduce impact of the stray light signal on the target echo signal by transferring the stray light signal while structural complexity of the transceiver optical system is not increased, and effectively suppress the stray light signal in the transceiver optical system. In this way, detection accuracy of the target echo signal is improved.

It should be noted that the transceiver optical system in this application may be applied to the lidar, or may be applied to another apparatus, device, or chip other than the lidar, for example, applied to another intelligent terminal that has a detection function other than the lidar, or disposed in a component of another intelligent terminal. The component includes but is not limited to another sensor like a controller, a chip, or a camera, another component, or the like. Alternatively, the transceiver optical system in this application may be applied to the foregoing driving scenario, or may be applied to another imaging system other than the foregoing driving scenario, for example, a three-dimensional building modeling system, a terrain mapping system, or a rendezvous and docking system. In addition, with evolution of a system architecture and emergence of a new scenario, the transceiver optical system provided in this application is also applicable to a similar technical problem. This is not specifically limited in this application.

The following describes specific implementation of the transceiver optical system in this application with reference to specific embodiments. It is clear that the described embodiments are merely some but not all of embodiments of this application.

It should be noted that the terms "system" and "network" may be used interchangeably in embodiments of this application. "A plurality of" means two or more. "And/or" describes an association relationship between associated objects, and represents that three relationships may exist. For example, A and/or B may represent the following cases: Only A exists, both A and B exist, and only B exists, where A and B may be singular or plural. "One or more of the following items (pieces)" or a similar expression thereof means any combination of these items, including any combination of singular items (pieces) or plural items (pieces). For example, one or more items (pieces) of a, b, or c may indicate: a, b, c, a and b, a and c, b and c, or a, b, and c, where a, b, and c may be singular or plural.

Unless otherwise specified, ordinal numbers such as "first" and "second" mentioned in embodiments of this application are used to distinguish a plurality of objects, but are not used to limit priorities or importance degrees of the plurality of objects. For example, the first emitter optical system and the second emitter optical system are merely used to distinguish between different emitter optical systems, but do not indicate different priorities, importance degrees, or the like of the two emitter optical systems.

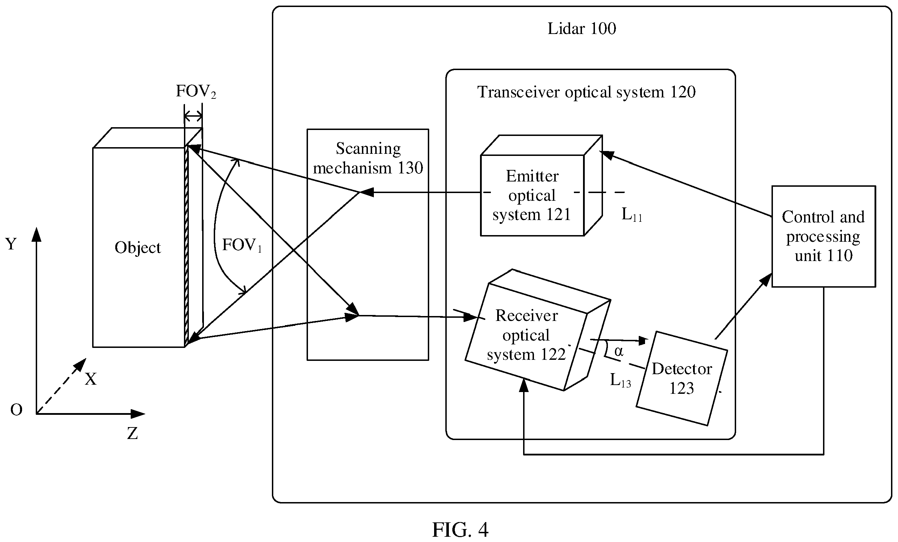

Based on the lidar 100 shown in FIG. 2, FIG. 4 shows an example of a schematic diagram of an architecture of another transceiver optical system according to an embodiment of this application. As shown in FIG. 4, in this example, a transceiver optical system 120 includes an emitter optical system 121 (namely, a first emitter optical system) and a receiver optical system 122 (namely, a first receiver optical system). An optical axis of the emitter optical system 121 is L₁₁, and an optical axis of the receiver optical system 122 is L₁₃. In addition, the optical axis L₁₁ and the optical axis L₁₃ have a first included angle, and the first included angle α is greater than 0 degrees. During implementation, the emitter optical system 121 is configured to transmit a first transmit signal from a first light source, and the receiver optical system 122 is configured to receive a first echo signal. The first echo signal includes a target echo signal that is obtained after the first transmit signal is reflected by an object, and may further include one or more of the following stray light signals: a crosstalk signal generated through one or more reflections, refractions, or scatterings on an optical element in the emitter optical system 121, an optical element in the receiver optical system 122, and/or another component (like a detector) in the transceiver optical system 120, a ghost signal that is reflected back by irradiating an object with a high reflectivity and that exceeds normal power strength, a transmit signal emitted by another lidar or another emitter optical system in the lidar 100, another stray light signal different from the target echo signal, or the like. This is not specifically limited.

For example, still refer to FIG. 4. The transceiver optical system 120 may further include a detector 123. The detector 123 may include a plurality of pixel regions. The plurality of pixel regions may be preset or preconfigured, and are controlled by the control and processing unit 110 to present a light spot corresponding to a received signal. The detector 123 and the receiver optical system 122 may be located on a same optical path, that is, an axis of the detector 123 (namely, a straight line from a center point of the detector 123 in a direction perpendicular to a pixel plane of the detector 123) overlaps the optical axis L₁₂ of the receiver optical system 122. In this way, after receiving the first echo signal, the receiver optical system 122 may further focus the target echo signal in the first echo signal to a pixel region of the detector 123, and the detector 123 may be controlled to present, in the pixel region, a light spot of the received target echo signal. In this example, the detector 123 and the receiver optical system 122 maintain a same posture, so that a probability that an echo signal transmitted by the receiver optical system 122 is focused on the pixel plane of the detector 123 can be increased, and a probability that the echo signal is focused outside the pixel plane of the detector 123 can be decreased.

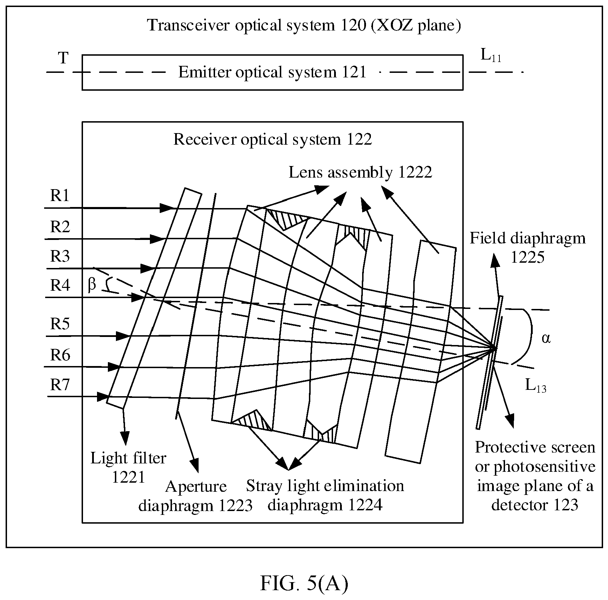

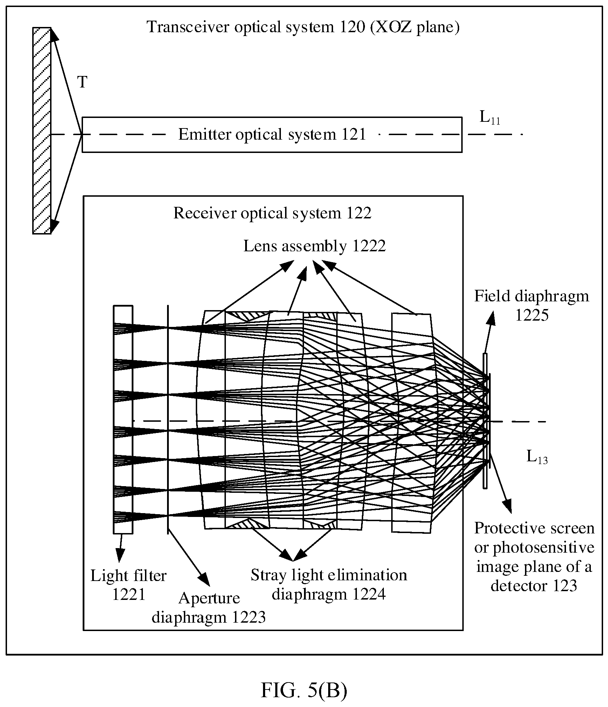

That the first light source is a linear light source is still used as an example. FIG. 5(A) and FIG. 5(B) show an example of a schematic diagram of internal light transmission of the transceiver optical system 120 shown in FIG. 4. FIG. 5(A) shows a light transmission diagram of the transceiver optical system 120 shown in FIG. 4 on an XOZ plane, and FIG. 5(B) shows a light transmission diagram of the transceiver optical system 120 shown in FIG. 4 on a YOZ plane. Refer to FIG. 4 and FIG. 5(A). From a perspective of the XOZ plane, after an object is scanned by using each linear light spot T emitted by the emitter optical system 121, the receiver optical system 122 receives, due to diffuse reflection of the object, an echo signal R₁ to an echo signal R₇ that are reflected in various directions. Because the optical axis L₁₃ of the receiver optical system 122 and the optical axis L₁₁ of the emitter optical system 121 have the first included angle, a direction in which the echo signal R₁ to the echo signal R₇ are transmitted into the receiver optical system 122 and the optical axis L₂₂ of the receiver optical system 122 also have the first included angle. In this way, after being transmitted by using an optical element in the receiver optical system 122, a target echo signal in the echo signal R₁ to the echo signal R₇ is no longer focused on a central pixel region of the detector 123, but is focused on another pixel region, which is referred to as a first pixel region, that deviates from the central pixel region. From another angle, refer to FIG. 4 and FIG. 5(B). From a perspective of the YOZ plane, after each of the echo signal R₁ to the echo signal R₇ is transmitted by using the receiver optical system 122, a target echo signal in the echo signal R₁ to the echo signal R₇ is also presented as a linear light spot in the first pixel region, and energy of the linear light spot is strong theoretically.

Refer to FIG. 5(A). Because the target echo signal in the echo signal R₁ to the echo signal R₇ is focused on the first pixel region, and the first pixel region deviates from the central pixel region, the target echo signal is not evenly distributed on two sides of an axis of the detector 123 after being transmitted to the detector 123. In this way, even if the target echo signal generates a stray light signal due to reflection (for example, mutual reflection between the detector 123, a lens assembly 1222, and a light filter 1221), the stray light signal is not evenly reflected back to a transmission range of the echo signal in the receiver optical system 122, but deviates by a specific distance. In addition, a larger degree α of the first included angle indicates a longer deviation distance after the stray light signal is reflected. In this way, in deviated stray light signals generated through reflection of the target echo signal, there are always a part of stray light signals beyond the transmission range of the echo signal R₁ to the echo signal R₇ in the receiver optical system 122. Even if these stray light signals are re-focused to the detector 123 after being reflected a plurality of times, a pixel region (referred to as a second pixel region) on which the stray light signals are focused is different from the first pixel region on which the target echo signal is focused. These stray light signals do not affect the light spot corresponding to the target echo signal. It can be learned that, the receiver optical system 122 and the emitter optical system 121 have the first included angle, so that the stray light signal in the receiver optical system 122 can be suppressed. In addition, effect of suppressing the stray light signal is further in a positive correlation with the degree α of the first included angle. A larger degree α of the first included angle indicates better effect of suppressing the stray light signal, and better helps improve accuracy of detecting the target echo signal by the detector 123. In addition, it can be learned by comparing FIG. 4 and FIG. 2 that, the receiver optical system 122 in FIG. 4 may be obtained by rotating the receiver optical system 122 shown in FIG. 2 along an axis (FIG. 4 shows a direction of a linear light spot corresponding to a transmit signal) on a plane perpendicular to an optical axis of the receiver optical system 122 shown in FIG. 2. In this solution, an included angle between the optical axis of the receiver optical system 122 and the optical axis of the emitter optical system 121 may be set to suppress a stray light signal. Compared with a solution in which a relay system is additionally arranged, this solution is more convenient to implement without affecting structural complexity of the receiver optical system 122 and the emitter optical system 121.

In a possible implementation, when the degree α of the first included angle is greater than 0 and less than an angular resolution of the lidar 100, although a small part of stray light signals are beyond the transmission range of the echo signal R₁ to the echo signal R₇ in the receiver optical system 122, because the angular resolution of the lidar 100 is not exceeded, there is a high probability that the stray light signals cannot be identified by the detector 123. Consequently, light spots corresponding to the stray light signals overlap the light spot corresponding to the echo signal. This is not conducive to suppressing the stray light signal. Therefore, the degree α of the first included angle may be set to a value not less than the angular resolution of the lidar 100, for example, may be set to a value between twice and 10 times the angular resolution of the lidar 100. Experiments prove that when the degree α of the first included angle is not less than the angular resolution of the lidar 100 and is less than six times the angular resolution of the lidar 100, a part of deviated stray light signals generated through reflection of the target echo signal may be beyond the transmission range of the echo signal R₁ to the echo signal R₇ in the receiver optical system 122, and a part of the deviated stray light signals are within the transmission range of the echo signal R₁ to the echo signal R₇ in the receiver optical system 122, that is, light spots corresponding to the stray light signals partially overlap the light spot corresponding to the echo signal. In this case, the preset or preconfigured second pixel region that is controlled to present the light spots corresponding to the stray light signals may also partially overlap the first pixel region that is used to present the light spot corresponding to the echo signal. On the contrary, when the degree α of the first included angle is not less than six times the angular resolution of the lidar 100, all deviated stray light signals generated through reflection of the target echo signal can be beyond the transmission range of the echo signal R₁ to the echo signal R₇ in the receiver optical system 122, that is, none of light spots corresponding to the stray light signals overlaps the light spot corresponding to the echo signal. In this case, the preset or preconfigured second pixel region used to present the light spots corresponding to the stray light signals may not overlap the first pixel region used to present the light spot corresponding to the echo signal. Based on this, the degree α of the first included angle may be preferably set to be more than six times the angular resolution of the lidar 100. For example, when the degree α of the first included angle is set to eight times the angular resolution of the lidar 100, if the angular resolution is 0.25°, the degree α of the first included angle may be 2°, to consider both a non-overlapping feature of two light spots and impact of a form of the receiver optical system 122 on the entire transceiver optical system 120. It should be noted that degree information herein is not accurate. Due to errors that may be caused by a design and a manufacturing process, the degree information may also have some deviations. These deviations are ignored in solution description.

Further, the angular resolution of the lidar 100 is related to a scanning direction of the object. For example, when the first light source is a linear light source, the first emitter optical system 121 scans the object by using a linear light spot. If the scanned object is traversed in a vertical direction (namely, a positive direction or a negative direction of the Y-axis shown in FIG. 4), the angular resolution herein is a vertical angular resolution of the lidar 100, namely, an angle by which two adjacent linear light spots in two consecutive times of scanning are spaced in the vertical direction. On the contrary, if the scanned object is traversed in a horizontal direction (namely, a positive direction or a negative direction of the X-axis shown in FIG. 4), the angular resolution herein is a horizontal angular resolution of the lidar 100, that is, an angle by which two adjacent linear light spots in two consecutive times of scanning in the horizontal direction are spaced. In addition, if the scanned object is traversed in a tilt direction that is neither horizontal nor vertical, the angular resolution in the tilt direction includes both a horizontal angular resolution and a vertical angular resolution of the lidar 100. The horizontal angular resolution is a component of two adjacent linear light spots in two consecutive times of scanning in the horizontal direction, and the vertical angular resolution is a component of two adjacent linear light spots in two consecutive times of scanning in the vertical direction. The linear light spot may be a horizontal linear light spot (namely, a linear light spot parallel to the X-axis shown in FIG. 4) or a vertical linear light spot (namely, a linear light spot parallel to the Y-axis shown in FIG. 4), or may be a tilted linear light spot that is neither horizontal nor vertical, or may be a bent linear light spot, a spliced linear light spot, a curved linear light spot, an abnormal-shaped linear light spot, or the like. This is not specifically limited.

In a possible implementation, the detector 123 may include a plurality of detection units. The plurality of detection units may be arranged in an array manner, or may be arranged in a column or a row, or may be arranged irregularly. This is not specifically limited. The plurality of detection units may include but are not limited to an avalanche photo diode (avalanche photo diode, APD), a single photon avalanche diode (single photon avalanche diode, SPAD), a positive intrinsic-negative (positive intrinsic-negative, PIN), a silicon photo multiplier (silicon photo multiplier, SiPM), and the like. In the foregoing plurality of detection units, the SPAD is also referred to as an APD in a Geiger mode, can convert an optical signal into an electrical signal through photoelectric effect, and provide gain effect of an internal current through avalanche multiplication, and has an extremely high signal gain and sensitivity. Therefore, the SPAD may be preferably selected as a detection unit of the detector 123.

Further, for example, the plurality of detection units in the detector 123 may be preset or preconfigured as a plurality of pixel regions, each pixel region may include one or more detection units, and the plurality of pixel regions include the first pixel region and the second pixel region. Specific locations of the first pixel region and the second pixel region on the detector 123 may be determined based on the first included angle. For example, in a possible implementation, after the emitter optical system 121 and the receiver optical system 122 are arranged based on the first included angle, the control and processing unit 110 may be used to control the emitter optical system 121 to emit a linear light spot used for testing, and collect a light spot presentation status of each detection unit on the detector 123 in a scanning process of the linear light spot used for testing. A region corresponding to a detection unit in which a light spot that has large energy and that is regular is located or a region that is slightly greater than the region is used as the first pixel region, and a region corresponding to a light spot that has small energy and that is irregular or a region that is slightly greater than the region is used as the second pixel region.

Further, for example, the first pixel region and the second pixel region may work in any one of the following manners.

In a possible implementation, the detection unit in the first pixel region and the detection unit in the second pixel region are switched to a working state as long as the detection units are powered on. In this way, when an echo signal is transmitted to the detector 123, the first pixel region presents the light spot corresponding to the target echo signal, generates an electrical signal corresponding to the light spot, and sends the electrical signal to the control and processing unit 110. The second pixel region presents the light spot corresponding to the stray light signal (or does not present a light spot when there is no stray light signal), generates an electrical signal corresponding to the light spot, and sends the electrical signal to the control and processing unit 110, so that the control and processing unit 110 determines an object feature by using the electrical signal sent by the first pixel region, the electrical signal sent in the second pixel region may be discarded, or may be used to perform another operation, for example, evaluating stray light suppression effect.

In another possible implementation, the detection unit in the first pixel region and the detection unit in the second pixel region are connected to the control and processing unit 110, and the control and processing unit 110 gates the detection unit in the first pixel region and/or the detection unit in the second pixel region according to a requirement. After the detection unit in the first pixel region is gated, the first pixel region is controlled to present the light spot corresponding to the target echo signal, generate an electrical signal corresponding to the light spot, and send the electrical signal corresponding to the light spot to the control and processing unit 110. After the detection unit in the second pixel region is gated, the second pixel region is controlled to present the light spot corresponding to the stray light signal, generate an electrical signal corresponding to the light spot, and send the electrical signal corresponding to the light spot to the control and processing unit 110. However, no light spot is presented in a pixel region that is not gated, and no electrical signal corresponding to the light spot is generated.

Further, for example, if the first pixel region and the second pixel region do not overlap, a light spot presented in the first pixel region is the light spot corresponding to the target echo signal, and a light spot presented in the second pixel region is the light spot corresponding to the stray light signal. The control and processing unit 110 may directly use an electrical signal corresponding to the light spot presented in the required pixel region to complete a corresponding operation, without preprocessing the electrical signal. On the contrary, if the first pixel region and the second pixel region partially overlap, light spots presented in an overlapping region of the first pixel region and the second pixel region include both the light spot corresponding to the target echo signal and the light spot corresponding to the stray light signal. Subsequently, the light spots presented in the overlapping region may be further filtered by the control and processing unit 110, to obtain another pure light spot from which a light spot is removed. Then, a subsequent operation, for example, determining an object feature, is performed by using the pure light spot.

It should be noted that the foregoing content is described only by using an example in which the first pixel region presents the light spot corresponding to the target echo signal and the second pixel region presents the light spot corresponding to the stray light signal. In another solution, the first pixel region and the second pixel region may be further configured to present a light spot corresponding to another signal. For example, in another possible implementation, the receiver optical system 122 may further separate a first-type target echo signal and a second-type target echo signal from the received first echo signal according to a requirement, transmit the first-type target echo signal to the first pixel region of the detector 123, and transmit the second-type target echo signal to the second pixel region of the detector 123, so as to present different signal light spots by using different pixel regions. Alternatively, in still another possible implementation, the receiver optical system 122 and the detector 123 may be alternatively set to be rotatable. The receiver optical system 122 and the detector 123 rotate to a first posture at a first moment, and rotate to a second posture at a second moment. The receiver optical system 122 transmits, in the first posture, a target echo signal in echo signals received at the first moment to the first pixel region of the detector 123, transmits, in the second posture, a target echo signal in echo signals received at the second moment to the second pixel region of the detector 123, so as to flexibly distinguish, in a rotation manner, target echo signals corresponding to different moments.

In a possible implementation, still refer to FIG. 5(A). The receiver optical system 122 may include at least one light filter 1221, a normal direction of the at least one light filter 1221 and the optical axis L₁₃ of the receiver optical system 122 have a second included angle, and a degree β of the second included angle is greater than 0. The at least one light filter 1221 may perform filtering on the received echo signals R₁ to R₇, and output a target echo signal corresponding to a transmit signal T, for example, a target echo signal having a same frequency as the transmit signal T. In addition, the normal direction of the at least one light filter 1221 and the optical axis L₁₃ of the receiver optical system 122 have a specific included angle. Even if a signal is reflected after being transmitted back to the light filter 1221 within a transmission range of the receiver optical system 122 to generate a stray light signal, the stray light signal is reflected to another transmission range that deviates from the transmission range of the signal in the receiver optical system 122 due to existence of β. This helps further transfer a part or all of the stray light signals. As a quantity of light filters 1221 increases, accumulated energy of stray light signals reflected in the system is stronger. This may not be conductive to transferring the stray light signals. In a design, the quantity of light filters 1221 may be set to 1, to avoid an energy accumulation phenomenon of the stray light signals reflected in the system as much as possible while a necessary filtering operation is ensured, and further reduce detection impact on the target echo signal by transferring the stray light signals.

Further, for example, the degree β of the second included angle may not be less than the angular resolution of the lidar 100. In a design, the degree may be set to a value that is not less than six times the angular resolution of the lidar 100, so that impact of a form of the at least one light filter 1221 on the receiver optical system 122 is reduced when the at least one light filter 1221 transfers a stray light signal to a position that does not overlap the transmission range of the signal in the receiver optical system 122. The angular resolution of the lidar 100 is related to the scanning direction of the object. For example, when the first light source is a linear light source, if the lidar traverses the scanned object in a vertical direction (namely, a positive direction or a negative direction of the Y-axis shown in FIG. 4), the angular resolution in the vertical direction is a vertical angular resolution of the lidar 100. If the lidar traverses the scanned object in a horizontal direction (namely, a positive direction or a negative direction of the X-axis shown in FIG. 4), the angular resolution in the horizontal direction is a horizontal angular resolution of the lidar 100. If the scanned object is traversed in a tilt direction that is neither horizontal nor vertical, the angular resolution in the tilt direction includes both a horizontal angular resolution and a vertical angular resolution of the lidar 100, where the horizontal angular resolution is a component of two adjacent linear light spots in two consecutive times of scanning in the horizontal direction, and the vertical angular resolution is a component of two adjacent linear light spots in two consecutive times of scanning in the vertical direction. The linear light spot may be a horizontal linear light spot (namely, a linear light spot parallel to the X-axis shown in FIG. 4) or a vertical linear light spot (namely, a linear light spot parallel to the Y-axis shown in FIG. 4), or may be a tilted linear light spot that is neither horizontal nor vertical, or may be a bent linear light spot, a spliced linear light spot, a curved linear light spot, an abnormal-shaped linear light spot, or the like. This is not specifically limited.

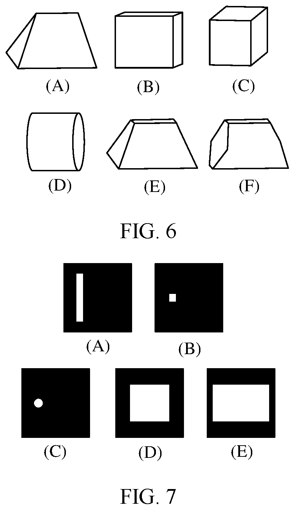

Further, for example, FIG. 6 shows several possible structures of the light filter 1221 provided in embodiments of this application. As shown in FIG. 6, at least one light filter 1221 may include one or more of a wedge-shaped light filter shown in (A) in FIG. 6, a rectangular light filter shown in (B) in FIG. 6, a square light filter shown in (C) in FIG. 6, a cylindrical light filter shown in (D) in FIG. 6, a trapezoidal light filter shown in (E) in FIG. 6 or a hexagonal light filter shown in (F) in FIG. 6, and may further include a light filter of another shape, for example, a circular light filter or another polygonal light filter. This is not specifically limited. When the light filter 1221 is the wedge-shaped light filter shown in (A) in FIG. 6, the trapezoidal light filter shown in (E) in FIG. 6, the hexagonal light filter shown in (F) in FIG. 6, or another light filter having an edge surface tilt feature, because an edge surface of the light filter 1221 is tilted, if an included angle between a normal of the edge surface of the light filter 1221 and the optical axis L₁₃ of the receiver optical system 122 is not less than β, the light filter 1221 and another optical element in the receiver optical system 122 may be directly maintained in a same form, so that a second included angle between the normal of the light filter 1221 and the optical axis L₁₃ of the receiver optical system 122 is implemented by using the edge surface tilt feature of the light filter 1221. This facilitates installation layout of the light filter 1221 and other optical elements in the receiver optical system 122. On the contrary, if the included angle between the normal of the edge surface of the light filter 1221 and the optical axis L₁₃ of the receiver optical system 122 is less than β, during installation, the light filter 1221 and other optical elements in the receiver optical system 122 further need to have different forms, so that the second included angle between the normal of the light filter 1221 and the optical axis L₁₃ of the receiver optical system 122 is implemented by adjusting the form of the light filter 1221. Alternatively, when the light filter 1221 is the rectangular light filter shown in (B) in FIG. 6, the square light filter shown in (C) in FIG. 6, the cylindrical light filter shown in (D) in FIG. 6, or another light filter without an edge surface tilt feature, because a normal of an edge surface of the light filter 1221 is parallel to an optical axis of the light filter 1221, during installation, the optical axis of the light filter 1221 and the optical axis L₁₃ of the receiver optical system 122 may have an included angle β, so that the second included angle between the normal of the light filter 1221 and the optical axis of the first receiver optical system is implemented by changing a form of the light filter 1221.

It should be noted that, when the light filter 1221 is the light filter with the edge surface tilt feature, if an included angle between a normal of an edge surface of the light filter 1221 and the optical axis L₁₃ of the receiver optical system 122 is greater than β, and an included angle between a normal of another edge surface and the optical axis L₁₃ of the receiver optical system 122 is less than β, or if an included angle between normals of two edge surfaces of the light filter 1221 and the optical axis L₁₃ of the receiver optical system 122 is less than β, the included angle between the normals of the two edge surfaces of the light filter 1221 and the optical axis L₁₃ of the receiver optical system 122 may not be less than β by changing a posture of the light filter 1221, so that the two edge surfaces of the light filter 1221 can transfer a stray light signal.

In a possible implementation, still refer to FIG. 5(A). The receiver optical system 122 may further include a lens assembly 1222 and at least one first diaphragm. The at least one first diaphragm may be located in one or more of the following locations: as shown in FIG. 5(A), before the light filter 1221, between the light filter 1221 and the lens assembly 1222, between at least two adjacent lenses of the lens assembly 1222, and between the lens assembly 1222 and the detector 123. The lens assembly 1222 may focus a first echo signal or a target echo signal corresponding to a first transmit signal to a first pixel region of the detector 123, and the at least one first diaphragm may be configured to eliminate or suppress a stray light signal in the receiver optical system 122, to further improve accuracy of transmitting the target echo signal by the receiver optical system 122.

Further, for example, still refer to FIG. 5(A). The at least one first diaphragm may include a stray light elimination diaphragm 1224, where the stray light elimination diaphragm 1224 may be located between at least two adjacent lenses of the lens assembly 1222, and is configured to eliminate some stray light signals, transmitted to a side wall of the stray light elimination diaphragm 1224, of stray light signals transmitted between the at least two adjacent lenses. A stray light signal transmitted to an aperture of the stray light elimination diaphragm 1224 may be transmitted forwards, and is subsequently presented in the second pixel region of the detector 123 by using the receiver optical system 122. The stray light signal transmitted between the at least two adjacent lenses includes but is not limited to: a crosstalk signal transmitted between at least two adjacent lenses through one or more reflections between the light filter 1221, each lens in the lens assembly 1222, a lens tube on which the lens assembly 1222 is located, and the detector 123, a ghost signal that is reflected back by irradiating an object with a high reflectivity and that exceeds normal power strength, a transmit signal sent by another lidar or another emitter optical system in the lidar 100, or another stray light signal different from the target echo signal, or the like.

Further, for example, still refer to FIG. 5(A). The at least one first diaphragm may further include an aperture diaphragm 1223, and the aperture diaphragm 1223 may be located at any location of the receiver optical system 122, including but not limited to: before the light filter 1221, between the light filter 1221 and the lens assembly 1222, between at least two adjacent lenses of the lens assembly 1222, and between the lens assembly 1222 and the detector 123. In addition, an optical axis of the aperture diaphragm 1223 may overlap the optical axis L₁₃ of the receiver optical system 122, and is used to limit a light beam size of the first echo signal or the target echo signal that is output by the aperture diaphragm 1223.

Further, for example, an inner surface of the at least one first diaphragm may be of a concave structure or a convex structure. The first diaphragm is a structure with an aperture. The inner surface of the first diaphragm is a surface that is of the first diaphragm and that faces the aperture. A convex structure on the inner surface means that the inner surface protrudes in a direction toward the aperture, and a concave structure on the inner surface means that the inner surface is recessed in a direction back to the aperture. The stray light elimination diaphragm 1224 is used an example. An inner surface of the stray light elimination diaphragm 1224 disposed between the second lens and the third lens that are sorted from left to right in FIG. 5(A) is a concave structure. In this way, even if a stray light signal is transmitted to the inner surface of the stray light elimination diaphragm 1224, the stray light signal is probably first reflected by an inner surface of one side of the stray light elimination diaphragm 1224 to an inner surface of the other side, and then reflected by the inner surface of the other side. In this way, a larger quantity of reflections indicate that power strength of the stray light signal can be reduced more. This helps reduce a probability that the stray light signal is transmitted to the detector 123. Correspondingly, an inner surface of the stray light elimination diaphragm 1224 disposed between the first lens and the second lens that are sorted from left to right in FIG. 5(A) is a convex structure. In this way, a stray light signal transmitted to the inner surface of the stray light elimination diaphragm 1224 is reflected again by the convex structure to a side of a direction from which the stray light signal is transmitted. This helps reduce a probability that the stray light signal is directly transmitted to another lens, and may also achieve an objective of suppressing the stray light signal by increasing a quantity of reflection times. Correspondingly, the inner surface of the aperture diaphragm 1223 may also be set to a convex structure or a concave structure, so that a stray light signal transmitted to the inner surface of the aperture diaphragm 1223 is reflected once or more times, to achieve an objective of suppressing the stray light signal.

Further, for example, the inner surface of the at least one first diaphragm may be implemented by using one or more of the following processing: matting material spraying, to eliminate a stray light signal transmitted to the inner surface of the at least one first diaphragm, where the matting material may include but is not limited to a pure polyester matting agent, an organic matting agent, an matte paint, or the like; an anodic oxidization process, where a reflectivity of the anodic oxidization may be controlled to a small value, to reduce a reflection probability of the stray light signal transmitted to the inner surface of at least one first diaphragm; coating, for example, an anti-reflection film is coated, to achieve an objective of reducing or eliminating the stray light signal of the system by reducing a reflectivity of light on the inner surface of the aperture diaphragm; or performing electrophoresis, that is, using electrophoresis materials with different electrical properties to coat a film on the inner surface to form an insoluble intra-particle microgel, so that the stray light signal is transmitted to the film to form diffuse reflection, thereby achieving an objective of matting. The electrophoresis material includes but is not limited to electrophoresis resin or electrophoresis aluminum alloy. In this way, when the at least one first diaphragm is set to the convex structure or the concave structure, and the inner surface is processed by using a special process like matting material spraying, an anodic oxidization process, coating, or electrophoresis, after the stray light signal is transmitted to the inner surface of the at least one first diaphragm, matting is first performed on the inner surface processed by using the special process. Then, if there is still a residual stray light signal, the residual stray light signal is further reflected by the convex structure or the concave structure, to implement secondary matting, so as to better suppress the stray light signal through the secondary matting.

In a possible implementation, still refer to FIG. 5(A). The transceiver optical system 120 may further include a second diaphragm, for example, a field diaphragm 1225. The field diaphragm 1225 may be connected to a protective layer (for example, protective glass) or a photosensitive image plane of the detector 123, and is configured to limit a field of view of a target echo signal received by the photosensitive image plane of the detector 123. In addition, a stray light signal transmitted to a side wall of the field diaphragm 1225 is suppressed, and a stray light signal transmitted to an aperture of the field diaphragm 1225 may be transmitted forwards, and is subsequently presented in the second pixel region of the detector 123 by using the receiver optical system 122. The stray light signal transmitted to the side wall or the aperture of the field diaphragm 1225 includes but is not limited to: a crosstalk signal transmitted between at least two adjacent lenses through one or more reflections between the light filter 1221, each lens in the lens assembly 1222, a lens tube on which the lens assembly 1222 is located, and the detector 123, a crosstalk signal reflected to the transceiver optical system 120 through the photosensitive image plane or the protective layer of the detector 123, a ghost signal that is reflected back by irradiating an object with a high reflectivity and that exceeds normal power strength, a transmit signal sent by another lidar or another emitter optical system in the lidar 100, or another stray light signal different from the target echo signal, or the like.

In the foregoing implementation, when the field diaphragm 1225 is connected to the photosensitive image plane of the detector 123, a field of view limited by the field diaphragm 1225 is a field of view of a target echo signal that can be received by the photosensitive image plane of the detector 123. In this way, the field diaphragm 1225 can be connected to the photosensitive image plane only after the protective layer of the detector 123 is removed. When the field diaphragm 1225 is connected to the protective layer of the detector 123, a field of view limited by the field diaphragm 1225 is actually a field of view of a target echo signal that can be received by the protective layer of the detector 123. Before the target eco signal is transmitted to the photosensitive image plane of the detector 123, the field of view may be further affected by a path between the protective layer and the photosensitive image plane. In this way, the field of view of the target echo signal actually received by the photosensitive image plane changes, and therefore, a second diaphragm connected to the protective layer is referred to as a type of field diaphragm. In this way, the field diaphragm 1225 may be directly connected to the protective layer, and the detector 123 does not need to be disassembled. This helps reduce implementation difficulty.

In a possible implementation, a surface that is of the field diaphragm 1225 and that faces the detector 123 and/or a surface that is of the field diaphragm 1225 and that backs onto the detector 123 may be implemented by using one or more of the following processing: matting material spraying; an anodic oxidation process; coating; or electrophoresis that is performed to further eliminate a stray light signal transmitted to the surface that is of the field diaphragm 1225 and that faces and/or backs onto the detector 123. When the foregoing processing is performed on the surface that is of the field diaphragm 1225 and that faces the detector 123, the field diaphragm 1225 may eliminate a crosstalk signal generated due to reflection of the detector 123. When the foregoing processing is performed on the surface that is of the field diaphragm 1225 and that backs onto the detector 123, the field diaphragm 1225 may eliminate a crosstalk signal generated due to reflection of the lens assembly 1222 or the lens tube on which the lens assembly 1222 is located. A signal reflected by the detector 123, a signal reflected by the lens assembly 1222, or a signal reflected by the lens tube in which the lens assembly 1222 is located may be a target echo signal, or may be a crosstalk signal generated through reflection by another component. This is not limited.

In a possible design, the field diaphragm 1225 may be connected to the protective layer or the photosensitive image plane of the detector 123 in an adhesive dispensing manner. Still refer to FIG. 5(A). A size of the field diaphragm 1225 may be greater than a size of the protective layer or the photosensitive image plane of the detector 123, adhesive dispensing may be performed at a location at which the field diaphragm 1225 exceeds the protective layer or the photosensitive image plane of the detector 123, to fasten the field diaphragm 1225 to the protective layer or the photosensitive image plane of the detector 123. Correspondingly, because an adhesive dispensing location and the location that exceeds the protective layer or the photosensitive image plane of the detector 123 do not affect actual field of view limiting effect, one or more of the following operations may be performed only on a region in which the protective layer or the photosensitive image plane of the detector 123 overlaps the field diaphragm 1225: matting material spraying, an anodic oxidization process, coating, or electrophoresis. The foregoing processing is not performed on the adhesive dispensing location and a region that exceeds the protective layer or the photosensitive image plane of the detector 123, to reduce the complexity of the process.

It should be noted that the field diaphragm 1225 may be a diaphragm having an opening, and a location and a size of the opening need to be preset or preconfigured based on the first pixel region and the second pixel region. For example: When a light spot corresponding to the first pixel region needs to be used, the opening of the field diaphragm 1225 needs to cover the entire first pixel region, so that a target echo signal in a field-of-view range corresponding to the first pixel region can be accurately presented on the first pixel region through the opening of the field diaphragm 1225. For another example, when a light spot corresponding to the second pixel region needs to be used, the opening of the field diaphragm 1225 needs to cover the entire second pixel region, so that a target echo signal in a field-of-view range corresponding to the second pixel region can be accurately presented on the second pixel region through the opening of the field diaphragm 1225. In addition, it is assumed that the opening of the field diaphragm 1225 needs to cover the entire first pixel region, an opening shape of the field diaphragm 1225 may be further preset or preconfigured based on a light spot corresponding to the target echo signal. For example, FIG. 7 shows an example of a structure of a schematic diagram of a field diaphragm according to an embodiment of this application. In this example, it is assumed that a light spot presented by the target echo signal is in a left region of the detector 123. In this case, when the light spot corresponding to the target echo signal is presented as a linear light spot, the field diaphragm 1225 may have a long strip-shaped opening shown in (A) in FIG. 7. When the light spot corresponding to the target echo signal is presented as a spot light spot, the field diaphragm 1225 may have a square opening shown in (B) in FIG. 7, or have a circular opening shown in (C) in FIG. 7. When the light spot corresponding to the target echo signal is presented as a planar light spot, the field diaphragm 1225 may have a square opening shown in (D) in FIG. 7, or a rectangular opening shown in (E) in FIG. 7. It should be understood that only several possible opening shapes of the field diaphragm 1225 are simply shown herein. In an actual operation, the several opening shapes shown in FIG. 7 do not need to be limited provided that the opening can cover the entire first pixel region. This is not specifically limited in this application.

In addition, the transceiver optical system 120 shown in FIG. 4 is described by using an example in which the emitter optical system 121 and the receiver optical system 122 are located on a same side of the scanning mechanism 130. In another scenario, the emitter optical system 121 and the receiver optical system 122 may alternatively be located on different sides of the scanning mechanism 130. For example, as shown in the figure, the emitter optical system 121 is located on a left side of the scanning mechanism 130, and the receiver optical system 122 is located on a right side of the scanning mechanism 130. Alternatively, the emitter optical system 121 is located on a right side of the scanning mechanism 130, and the receiver optical system 122 is located on a left side of the scanning mechanism 130. In addition, the emitter optical system 121 and the receiver optical system 122 may be separately implemented on different components shown in FIG. 4, or may be integrated into one component for unified implementation. This is not specifically limited.

In this embodiment of this application, a quantity of emitter optical systems and a quantity of receiver optical systems in the transceiver optical system 120 may be one-to-one, one-to-many, many-to-one, or many-to-many. The following uses an example in which the emitter optical system and the receiver optical system are located on different sides of the scanning mechanism 130 to describe further implementations of several transceiver optical systems 120.

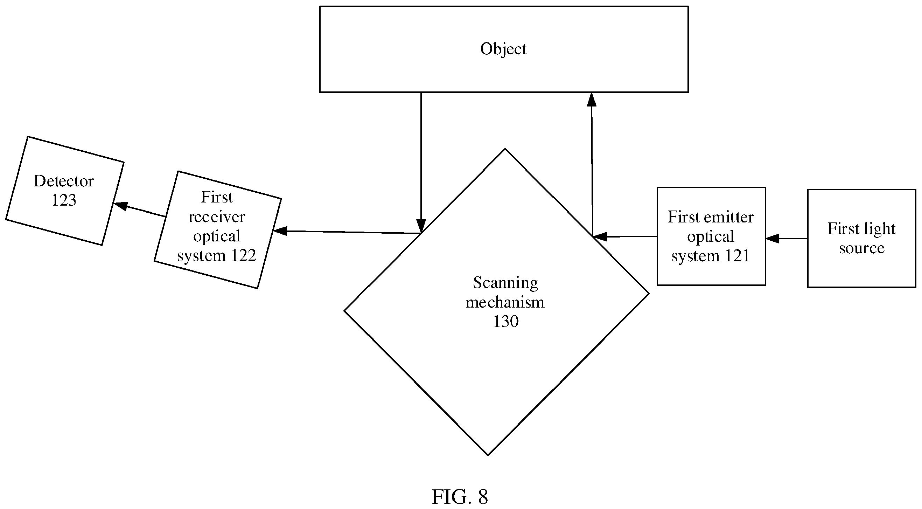

In an optional implementation, FIG. 8 shows an example of a schematic diagram of an architecture of another transceiver optical system according to an embodiment of this application. As shown in FIG. 8, in this example, a transceiver optical system 120 is one-emitter one-receiver system, and includes a first emitter optical system 121 located on one side of a scanning mechanism 130 and a first receiver optical system 122 located on the other side of the scanning mechanism 130. The first emitter optical system 121 is configured to transmit a first transmit signal from a first light source, and the first receiver optical system 122 is configured to: receive a first echo signal, and transmit, to a detector 123, a first target echo signal that is obtained after the first transmit signal included in the first echo signal is reflected by an object, so that the detector 123 generates, based on the first target echo signal, an electrical signal used to determine target information (for example, an object feature), and sends the electrical signal to a control and processing unit 110.

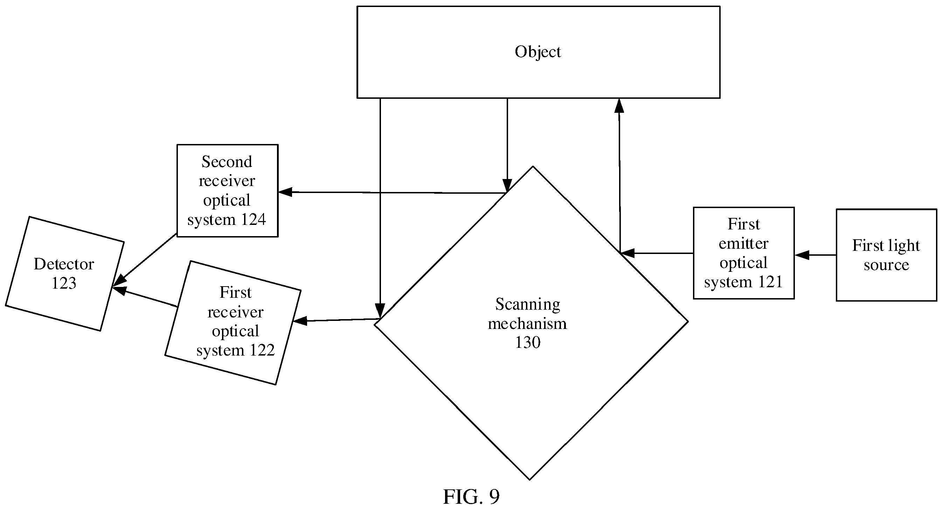

In another optional implementation, FIG. 9 shows an example of a schematic diagram of an architecture of still another transceiver optical system according to an embodiment of this application. As shown in FIG. 9, in this example, a transceiver optical system 120 is a one-emitter and two-receiver system, and includes a first emitter optical system 121 located on one side of a scanning mechanism 130, and a first receiver optical system 122 and a second receiver optical system 124 that are located on the other side of the scanning mechanism 130. The first emitter optical system 121 is configured to transmit a first transmit signal from a first light source, the first receiver optical system 122 is configured to receive a first echo signal, and the second receiver optical system 124 is configured to receive a second echo signal. The second echo signal is the same as the first echo signal, and each include a target echo signal that is obtained after the first transmit signal is reflected by an object. The first receiver optical system 122 and the second receiver optical system 124 may correspond to a same detector 123 shown in FIG. 9, or may correspond to different detectors. When the first receiver optical system 122 and the second receiver optical system 124 correspond to the same detector 123, a posture of the detector 123 is consistent with a posture of the first receiver optical system 122, but is different from a posture of the second receiver optical system 124. The first receiver optical system 122 may further transmit the target echo signal included in the first echo signal to the detector 123, and the second receiver optical system 124 may further transmit the target echo signal included in the second echo signal to the detector 123. The detector 123 generates, based on the two parts of the target echo signal, an electrical signal used to determine target information, and sends the electrical signal to a control and processing unit 110. When the first receiver optical system 122 and the second receiver optical system 124 correspond to different detectors, the first receiver optical system 122 transmits the target echo signal included in the first echo signal to a corresponding detector, the second receiver optical system 124 transmits the target echo signal included in the second echo signal to a corresponding detector, and the two detectors separately generate, based on the target echo signals received by the two detectors, an electrical signal used to determine an object feature, and then send the electrical signal to a control and processing unit 110.

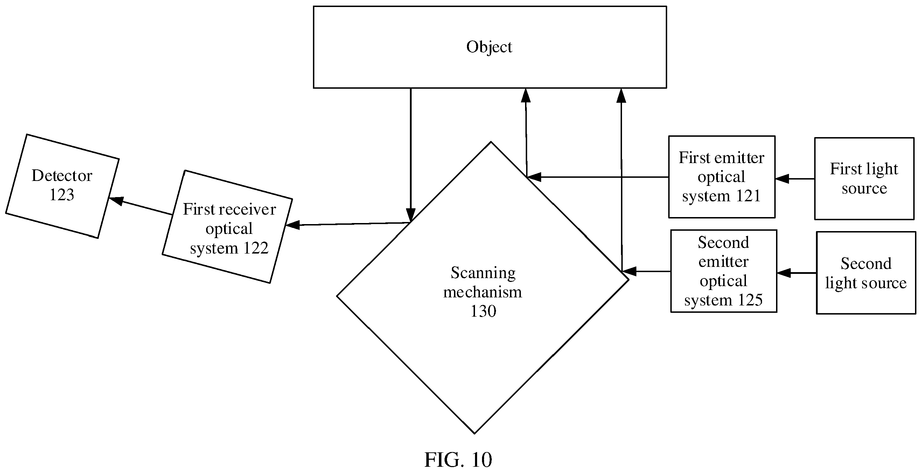

In still another optional implementation, FIG. 10 shows an example of a schematic diagram of an architecture of yet another transceiver optical system according to an embodiment of this application. As shown in FIG. 10, in this example, a transceiver optical system 120 is a two-emitter and one-receiver system, and includes a first emitter optical system and a second emitter optical system 125 that are located on one side of a scanning mechanism 130, and a first receiver optical system 122 that is located on the other side of a scanning mechanism 130. The first emitter optical system 121 is configured to transmit a first transmit signal from a first light source, and the second emitter optical system 125 is configured to transmit a second transmit signal from a second light source. The first receiver optical system 122 is configured to receive a first echo signal and a second echo signal. The first echo signal includes a target echo signal that is obtained after the first transmit signal is reflected by an object, and the second echo signal includes a target echo signal that is obtained after the second transmit signal is reflected by the object. The first receiver optical system 122 further transmits, to a detector 123, the target echo signal in the first echo signal and the target signal in the second echo signal, and the detector 123 generates an electrical signal used to determine target information. The second light source may be the same as or different from the first light source. When the second light source is the same as the first light source, the second echo signal is also the same as the first echo signal. When the second light source is different from the first light source, the second echo signal is usually the same as the first echo signal.

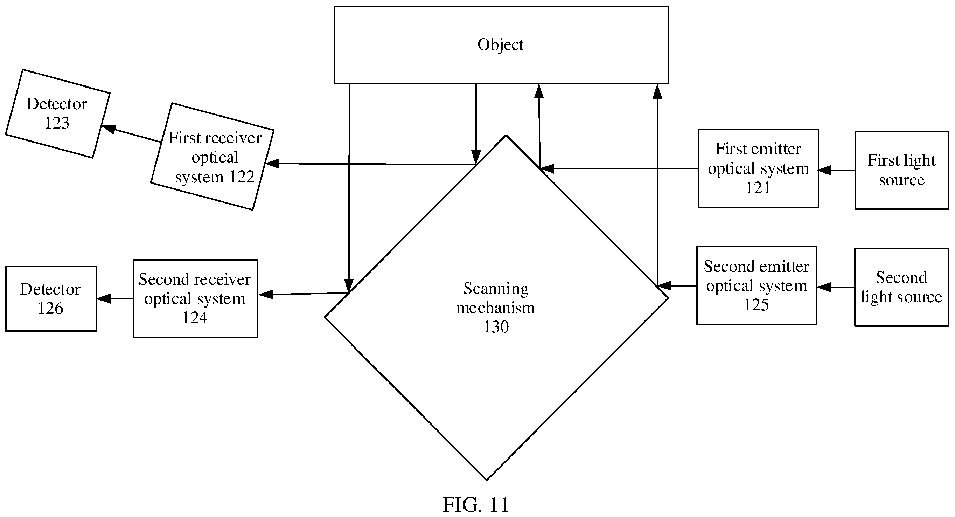

In yet another optional implementation, FIG. 11 shows an example of a schematic diagram of an architecture of still another transceiver optical system according to an embodiment of this application. As shown in FIG. 11, in this example, a transceiver optical system 120 is a two-emitter and two-receiver system, and includes a first emitter optical system 121 and a second emitter optical system 125 that are located on one side of a scanning mechanism 130, and a first receiver optical system 122 and a second receiver optical system 124 that are located on the other side of the scanning mechanism 130. The first emitter optical system 121 is configured to transmit a first transmit signal from a first light source, and the first receiver optical system 122 is configured to receive a first echo signal. The first echo signal includes a target echo signal that is obtained after the first transmit signal is reflected by an object. Correspondingly, the second emitter optical system 125 is configured to transmit a second transmit signal from a second light source, and the second receiver optical system 124 is configured to receive a second echo signal. The second echo signal includes a target echo signal that is obtained after the second transmit signal is reflected by an object. The second light source may be the same as or different from the first light source. When the second light source is the same as the first light source, the second echo signal is also the same as the first echo signal. When the second light source is different from the first light source, the second echo signal is usually the same as the first echo signal. The first receiver optical system 122 and the second receiver optical system 124 may correspond to a same detector, or may correspond to different detectors shown in FIG. 11. When the first receiver optical system 122 and the second receiver optical system 124 correspond to a same detector, the first receiver optical system 121 transmits, to the detector, the target echo signal included in the first echo signal, and the second receiver optical system 124 also transmits, to the detector, the target echo signal included in the second echo signal. The detector generates, based on the two parts of the target echo signal, an electrical signal used to determine target information. When the first receiver optical system 122 and the second receiver optical system 124 correspond to different detectors, the first receiver optical system 122 transmits the target echo signal included in the first echo signal to a corresponding detector 123. The detector 123 generates, based on the target echo signal included in the first echo signal, a first electrical signal used to determine target information. The second receiver optical system 124 transmits the target echo signal included in the second echo signal to a corresponding detector 126. The detector 126 generates, based on the target echo signal included in the second echo signal, a second electrical signal used to determine target information.

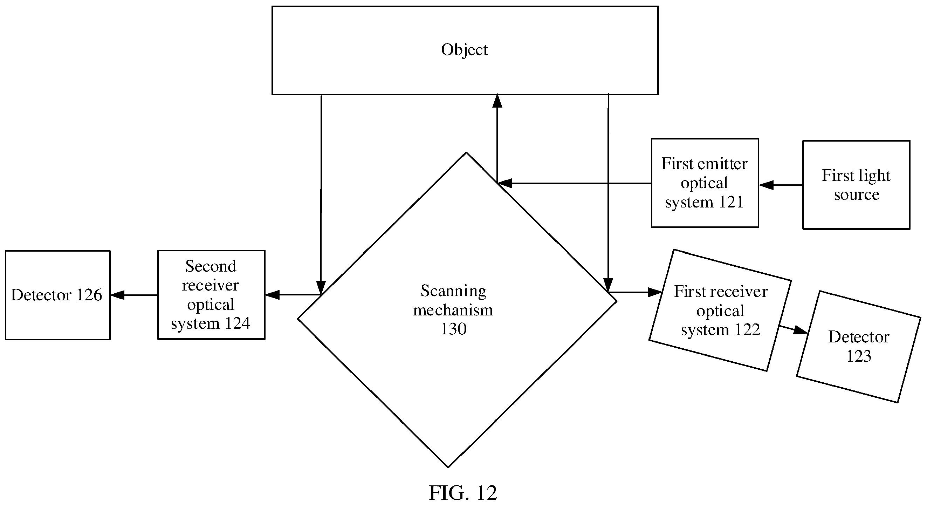

It should be noted that the foregoing example is described merely by using an example in which the emitter optical system and the receiver optical system are located on different sides of the scanning mechanism. In another example, at least one emitter optical system and at least one receiver optical system may be located on a same side of the scanning mechanism. In addition, the emitter optical system and/or the receiver optical system on a same side may be separately implemented in different components, or may be integrated in a same component. For example, the one-emitter and two-receiver transceiver optical system is used as an example. FIG. 12 shows an example of a schematic diagram of an architecture of yet another transceiver optical system according to an embodiment of this application. As shown in FIG. 12, in this example, a transceiver optical system 120 includes a first emitter optical system 121 located on one side of a scanning mechanism 130, and a first receiver optical system 122 and a second receiver optical system 124 that are located on the other side of the scanning mechanism 130. The first emitter optical system 121 is configured to transmit a first transmit signal from a first light source, the first receiver optical system 122 is configured to receive a first echo signal, and the second receiver optical system 124 is configured to receive a second echo signal. The second echo signal is the same as the first echo signal, and each include a target echo signal that is obtained after the first transmit signal is reflected by an object. As shown in FIG. 12, the first receiver optical system 122 and the second receiver optical system 124 may correspond to different detectors. The first receiver optical system 122 is configured to transmit the target echo signal included in the first echo signal to a corresponding detector 123. The second receiver optical system 124 is configured to transmit the target echo signal included in the second echo signal to a corresponding detector 126. The detector 123 and the detector 126 separately generate, based on the target echo signals received by the detector 123 and the detector 126, an electrical signal used to determine an object feature, and then send the electrical signal to a control and processing unit 110. Certainly, the first receiver optical system 122 and the second receiver optical system 124 may alternatively correspond to a same detector. This is not limited herein.

It should be understood that, in the two-emitter and one-receiver transceiver optical system, one emitter optical system and the receiver optical system may be located on one side of the scanning mechanism, and the other emitter optical system is located on the other side of the scanning mechanism, or two emitter optical systems and the receiver optical system are located on a same side of the scanning mechanism. Alternatively, in the two-emitter and two-receiver transceiver optical system, one emitter optical system and one receiver optical system may be located on one side of the scanning mechanism, and the other emitter optical system and the other receiver optical system are located on the other side of the scanning mechanism; or the two emitter optical systems and one receiver optical system are located on one side of the scanning mechanism, and the other receiver optical system is located on the other side of the scanning mechanism; or one emitter optical system and the two receiver optical systems are located on one side of the scanning mechanism, and the other emitter optical system is located on the other side of the scanning mechanism, or the two emitter optical systems and the two receiver optical systems are located on a same side of the scanning mechanism. This is not specifically limited in this application.

In addition, when the transceiver optical system 120 includes a plurality of receiver optical systems, the plurality of receiver optical systems may all correspond to a same detector, or may correspond to two or more detectors. For example, at least two receiver optical systems correspond to a same detector, and other receiver optical systems correspond to different detectors, or the plurality of receiver optical systems all correspond to different detectors. In addition, when the plurality of receiver optical systems correspond to a same detector, an axis of the detector coincides with an optical axis of a first receiver optical system in the plurality of receiver optical systems, and there is an included angle between the axis of the detector and an axis of another receiver optical system in the plurality of receiver optical systems.

It should be noted that some variations may be made to the foregoing embodiment to obtain other embodiments. For example:

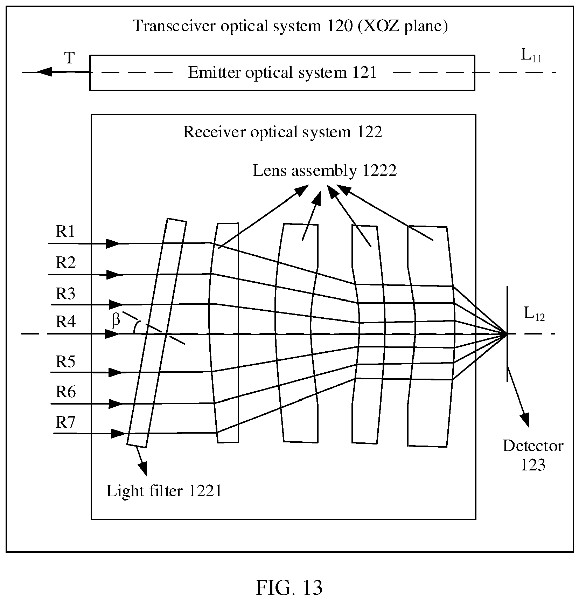

Variation 1: FIG. 13 shows an example of a schematic diagram of a structure of another transceiver optical system according to an embodiment of this application. As shown in FIG. 13, in this example, there is no included angle between a receiver optical system 122 and an emitter optical system 121, there is a second included angle between a normal of at least one light filter 1221 and an optical axis of the receiver optical system 122, and a degree β of the second included angle is greater than 0. In this case, even if a signal is reflected after being evenly transmitted back to the light filter 1221 along two sides of the optical axis of the receiver optical system 122 to generate a stray light signal, the stray light signal is reflected to another range that deviates from the optical axis of the receiver optical system 122 due to existence of β, and is not evenly reflected back to a pixel region as a target echo signal along the two sides of the optical axis of the receiver optical system 122. In this way, the stray light signal can be suppressed by transferring a part of or all of the stray light signal.

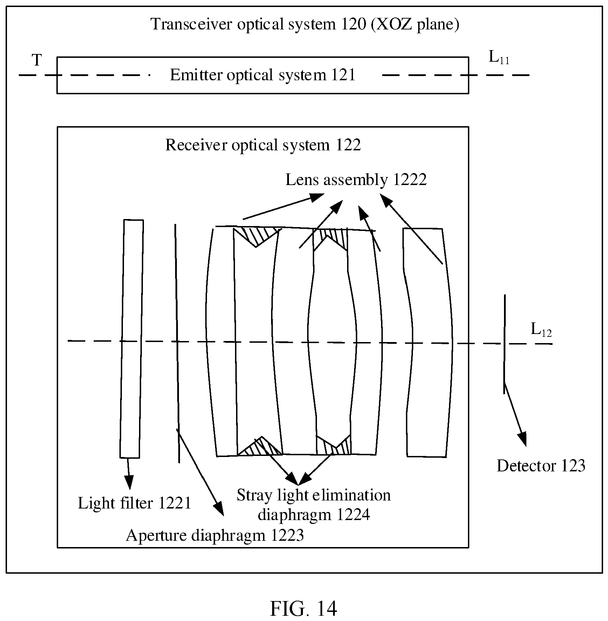

Variation 2: FIG. 14 shows an example of a schematic diagram of a structure of still another transceiver optical system according to an embodiment of this application. As shown in FIG. 14, in this example, there is no included angle between a receiver optical system 122 and an emitter optical system 121, there may be no included angle between a normal of at least one light filter 1221 and an optical axis of the receiver optical system 122. A stray light elimination diaphragm 1224 is disposed between at least two adjacent lenses of a lens assembly 1222 in the receiver optical system 122, and an aperture diaphragm 1223 is disposed at any position of the receiver optical system 122. The stray light elimination diaphragm 1224 and the aperture diaphragm 1223 may be convex or concave, and an inner surface of each of the stray light elimination diaphragm 1224 and the aperture diaphragm 1223 may be further obtained by performing one or more operations of matting material spraying, an anodic oxidization process, coating, or electrophoresis. In this way, when the stray light signal is transmitted into the receiver optical system 122, the stray light signal beyond an aperture size range may be blocked by the aperture diaphragm 1223, matting may be further performed on the stray light signal through the inner surface of the aperture diaphragm 1223 and the inner surface of the stray light elimination diaphragm 1223, and power strength of the stray light signal is reduced by increasing a quantity of reflection times through the convex or concave structure, to achieve an objective of suppressing the stray light signal.

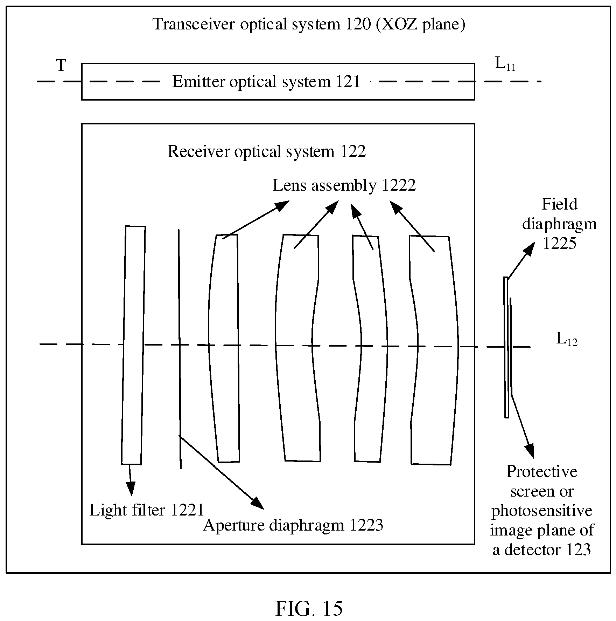

Variation 3: FIG. 15 shows an example of a schematic diagram of a structure of yet another transceiver optical system according to an embodiment of this application. As shown in FIG. 15, in this example, there is no included angle between a receiver optical system 122 and an emitter optical system 121, there may be no included angle between a normal of at least one light filter and an optical axis of the receiver optical system 122, and a protective layer or a photosensitive image plane of a detector 123 is connected to a field diaphragm 1225, a surface that is of the field diaphragm 1225 and that faces the detector 123 or backs onto the detector 123 may also be obtained by performing one or more operations of matting material spraying, an anodic oxidization process, coating, or electrophoresis. In this way, before being transmitted to the photosensitive image plane of the detector 123, the stray light signal may be further suppressed by the field diaphragm 1225, and matting is performed on the stray light signal through one or both surfaces of the field diaphragm 1225, to reduce a probability of reflecting the stray light signal and effectively suppressing the stray light signal.

It should be noted that other solutions in Embodiment 1 are also universal to the foregoing variant solutions. During implementation, directly refer to Embodiment 1. Details are not described again in this embodiment of this application.

It should be understood that division into the units of the transceiver optical system 120 is merely logical function division. During actual implementation, all or some of the units may be integrated into one physical entity, or may be physically separated. This is not specifically limited in this application. In addition, the foregoing listed components are functional components, and other components or component combinations that can implement a same function also fall within the protection scope of this application. This is not specifically limited in this application. In addition, the foregoing content is described only by using an example in which the light filter 1221 is located before the lens assembly 1222. In another scenario, the light filter 1221 may be further located between two adjacent lenses of the lens assembly 1222, or located between the lens assembly 1222 and the detector 123. This is not specifically limited.

In addition, the transceiver optical system provided in this application may be further extended to any information system in which a stray light signal needs to be transferred. It should be understood that all technical solutions for transferring the stray light signal by using the detection solution provided in this application fall within the protection scope of this application, and are not listed one by one in this application.

According to the detection solution provided in embodiments of this application, this application further provides a lidar, including the transceiver optical system described in the foregoing content.

In a possible implementation, a first light source may be a linear light source. In this way, the lidar may scan an object by using a linear light spot emitted by a linear light source, thereby helping implement efficient and accurate scanning of the object.

In a possible implementation, the lidar may further include a scanning mechanism, and the scanning mechanism includes one or more of a multi-sided rotating mirror, a swing mirror, a micro-electro-mechanical scanning mirror, or a prism.

According to the detection solution provided in embodiments of this application, this application further provides a terminal device, including the lidar described in the foregoing content. Examples of the terminal device include but are not limited to: a smart home device (like a television, a robotic vacuum cleaner, a smart desk lamp, an acoustic system, an intelligent lighting system, an electrical appliance control system, home background music, a home theater system, an intercom system, and a video surveillance), an intelligent transportation device (like a car, a ship, an unmanned aerial vehicle, a train, a truck, and a truck), an intelligent manufacturing device (like a robot, an industrial device, intelligent logistics, and a smart factory), an intelligent terminal (like a mobile phone, a computer, a tablet computer, a palmtop computer, a desktop computer, a headset, an acoustic device, a wearable device, a vehicle-mounted device, a virtual reality device and an augmented reality device).

According to the detection solution provided in embodiments of this application, this application further provides a control method, where the method is applicable to a control and processing unit (also referred to as a processor) in a lidar, and the method includes: The control and processing unit controls a first light source to emit a first transmit signal, where the first transmit signal is transmitted by using a first emitter optical system; and the control and processing unit controls a detector to receive a first echo signal, where the first echo signal includes a target echo signal that is obtained after the first transmit signal is reflected by an object, and the target echo signal is transmitted by using a first receiver optical system. An optical axis of the first emitter optical system and an optical axis of the first receiver optical system have a first included angle, and the first included angle is greater than 0 degrees.

In a possible implementation, the control and processing unit may further control the detector to gate a first pixel region, where the first pixel region is used to present a light spot corresponding to the target echo signal.

In a possible implementation, the control and processing unit may further control the detector to gate a second pixel region, where the second pixel region is used to present a light spot corresponding to a clutter signal.

In a possible implementation, the control and processing unit obtains target information by using an electrical signal corresponding to the target echo signal.

In a possible implementation, the control and processing unit may be specifically an integrated circuit chip, for example, may be a general purpose processor, a field programmable gate array (field programmable gate array, FPGA), an application-specific integrated chip (application-specific integrated circuit, ASIC), a system on chip (system on chip, SoC), a network processor (network processor, NP), a digital signal processing circuit (digital signal processor, DSP), a micro controller (micro controller unit, MCU), a programmable controller (programmable logic device, PLD), another programmable logic device, a discrete gate or a transistor logic device, a discrete hardware component, or another integrated chip. The control and processing unit may include a central processing unit (central processor unit, CPU), a neural-network processing unit (neural-network processing unit, NPU), and a graphics processing unit (graphics processing unit, GPU), and may further include an application processor (application processor, AP), a modem processor, an image signal processor (image signal processor, ISP), a video codec, a digital signal processor (digital signal processor, DSP), and/or a baseband processor. This is not specifically limited.

According to the detection solution provided in embodiments of this application, this application further provides a control apparatus, including at least one processor and an interface circuit, where the interface circuit is configured to provide data or code instructions for the at least one processor, and the at least one processor is configured to implement, by using a logic circuit or executing the code instructions, the method performed by the control and processing unit in the foregoing content.

According to the detection solution provided in embodiments of this application, this application further provides a chip, including a processor and an interface. The processor is configured to read instructions through the interface, to perform the method performed by the control and processing unit in the foregoing content.

According to the detection solution provided in embodiments of this application, this application further provides a computer-readable storage medium. The computer-readable storage medium stores a computer program. When the computer program is run, the method performed by the control and processing unit in the foregoing content is performed.

According to the detection solution provided in embodiments of this application, this application further provides a computer program product. When the computer program product runs on a processor, the method performed by the control and processing unit in the foregoing content is implemented.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transceiver optical system, comprising a first emitter optical system and a first receiver optical system, wherein an optical axis of the first emitter optical system and an optical axis of the first receiver optical system have a first included angle, and the first included angle is greater than 0 degrees;
the first emitter optical system is configured to transmit a first transmit signal from a first light source; and
the first receiver optical system is configured to receive a first echo signal, wherein the first echo signal comprises a target echo signal that is obtained after the first transmit signal is reflected by an object.

2. The transceiver optical system according to claim 1, wherein the transceiver optical system further comprises a detector, the detector comprises a first pixel region and a second pixel region, and the first pixel region and the second pixel region are controlled to present different light spots.

3. The transceiver optical system according to claim 2, wherein the first pixel region and the second pixel region do not overlap, or partially overlap.

4. The transceiver optical system according to claim 2 or 3, wherein the first pixel region is controlled to present a light spot corresponding to the target echo signal, and the second pixel region is controlled to present a light spot corresponding to a stray light signal.

5. The transceiver optical system according to any one of claims 1 to 4, wherein the first included angle is not less than an angular resolution of a lidar to which the transceiver optical system belongs.

6. The transceiver optical system according to any one of claims 1 to 5, wherein the first receiver optical system comprises at least one light filter, a normal direction of the at least one light filter and the optical axis of the first receiver optical system have a second included angle, and the second included angle is greater than 0 degrees; and
the at least one light filter is configured to perform filtering on the received first echo signal, and output the target echo signal corresponding to the first transmit signal.

7. The transceiver optical system according to claim 6, wherein the second included angle is not less than the angular resolution of the lidar to which the transceiver optical system belongs.

8. The transceiver optical system according to claim 6 or 7, wherein the at least one light filter comprises one or more of a wedge-shaped light filter, a rectangular light filter, a square light filter, a circular light filter, or a polygonal light filter.

9. The transceiver optical system according to any one of claims 6 to 8, wherein the first receiver optical system further comprises a lens assembly and at least one first diaphragm, and the at least one first diaphragm is located at one or more of the following locations: before the light filter, between the light filter and the lens assembly, between at least two adjacent lenses of the lens assembly, and between the lens assembly and the detector; and
the lens assembly is configured to focus, to the first pixel region, the target echo signal corresponding to the first transmit signal.

10. The transceiver optical system according to claim 9, wherein an inner surface of the at least one first diaphragm is of a concave structure or a convex structure.

11. The transceiver optical system according to any one of claims 2 to 10, wherein the transceiver optical system further comprises a second diaphragm, and the second diaphragm is connected to a protective layer or a photosensitive image plane of the detector.

12. The transceiver optical system according to any one of claims 9 to 11, wherein one or more of the inner surface of the at least one first diaphragm, a surface that is of the second diaphragm and that faces the detector, or a surface that is of the second diaphragm and that backs onto the detector are implemented by one or more of the following processing:
matting material spraying;
an anodic oxidization process;
coating; or
electrophoresis.

13. The transceiver optical system according to any one of claims 1 to 12, wherein the transceiver optical system further comprises a second emitter optical system and/or a second receiver optical system, wherein
the second emitter optical system is configured to transmit a second transmit signal from a second light source; the second receiver optical system is configured to receive a second echo signal; and the second light source is the same as or different from the first light source, and the second echo signal is the same as or different from the first echo signal.

14. A lidar, comprising the transceiver optical system according to any one of claims 1 to 13.

15. The lidar according to claim 14, wherein the first light source is a linear light source.

16. The lidar according to claim 14 or 15, wherein the lidar further comprises a scanning mechanism, and the scanning mechanism comprises one or more of a multi-sided rotating mirror, a swing mirror, a micro-electro-mechanical system (micro-electro-mechanical system, MEMS) scanning mirror, or a prism.

17. A terminal device, comprising the lidar according to any one of claims 14 to 16.

18. A control method, wherein the method comprises:
controlling a first light source to emit a first transmit signal, wherein the first transmit signal is transmitted by using a first emitter optical system;
controlling a detector to receive a first echo signal, wherein the first echo signal comprises a target echo signal that is obtained after the first transmit signal is reflected by an object, the target echo signal is transmitted by using a first receiver optical system, an optical axis of the first emitter optical system and an optical axis of the first receiver optical system have a first included angle, and the first included angle is greater than 0 degrees.

19. The method according to claim 18, wherein the method further comprises:
controlling the detector to gate a first pixel region, wherein the first pixel region is used to present a light spot corresponding to the target echo signal.

20. The method according to claim 18 or 19, wherein the detector is controlled to gate a second pixel region, wherein the second pixel region is used to present a light spot corresponding to a clutter signal.

21. The method according to any one of claims 18 to 20, wherein target information is obtained by using an electrical signal corresponding to the target echo signal.

22. A control apparatus, comprising at least one processor and an interface circuit, wherein the interface circuit is configured to provide data or code instructions for the at least one processor, and the at least one processor is configured to implement the method according to any one of claims 18 to 21 by using a logic circuit or executing the code instructions.

23. A computer-readable storage medium, wherein the computer-readable storage medium stores a computer program; and when the computer program is run, the method according to any one of claims 18 to 21 is performed.

24. A computer program product, wherein when the computer program product runs on a processor, the method according to any one of claims 18 to 21 is implemented.
